# EUROPEAN PATENT APPLICATION

(11) **EP 3 911 104 A1**
(43) Date of publication of application: **17.11.2021**
(21) Application number: 20756622.5
(22) Date of filing: 13.02.2020
(51) Int. Cl.: H04W 74/08

(54) **RANDOM ACCESS METHOD AND APPARATUS**

(30) Priority: 14.02.2019 CN 201910115161; 08.11.2019 CN 201911086604
(71) Applicant: Huawei Technologies Co., Ltd., Longgang Shenzhen, Guangdong 518129 (CN)
(72) Inventor: YOU, Chunhua, Shenzhen, Guangdong 518129 (CN); HUANG, Qufang, Shenzhen, Guangdong 518129 (CN); GUO, Yinghao, Shenzhen, Guangdong 518129 (CN); XU, Xiaoying, Shenzhen, Guangdong 518129 (CN); QU, Kaiyang, Shenzhen, Guangdong 518129 (CN)
(74) Representative: Gill Jennings & Every LLP
(86) International application number: PCT/CN2020/075009
(87) International publication number: WO 2020/164527

(57) **Abstract**

This application provides a random access method and apparatus. The method includes: A terminal receives a random access configuration sent by a network device; the terminal receives indication information sent by the network device, where the indication information is used to determine a target random access configuration in the random access configuration; the terminal determines the target random access configuration based on the indication information; and the terminal initiates random access to the network device by using the target random access configuration. The random access method provided in embodiments of this application helps better satisfy requirements of some data or services, to perform effective data transmission.

## Description

This application claims priority to Chinese Patent Application No. 201910115161.8, filed with the China National Intellectual Property Administration on February 14, 2019 and entitled "RANDOM ACCESS METHOD AND APPARATUS", and to Chinese Patent Application No. 201911086604.1, filed with the China National Intellectual Property Administration on November 8, 2019 and entitled "RANDOM ACCESS METHOD AND APPARATUS", which are incorporated herein by reference in their entireties.

### TECHNICAL FIELD

This application relates to the communications field, and more specifically, to a random access method and apparatus.

### BACKGROUND

In a long term evolution (long term evolution, LTE) system and a new radio (new radio, NR) system, a terminal is supported to initiate four-step random access (four-step random access) to a network device. To reduce process interaction and a latency of random access, two-step random access (two-step random access) is under discussion in a current standard conference.

When the terminal supports a plurality of random access types, how to select a random access type to satisfy a requirement of data or a service becomes an urgent problem to be resolved.

### SUMMARY

Embodiments of this application provide a random access method and apparatus, to help satisfy requirements of different data or services.

According to a first aspect, a random access method is provided. The method includes: A terminal receives a random access configuration from a network device. The terminal receives first indication information from the network device, where the first indication information is used to determine a target random access configuration in the random access configuration. The terminal initiates random access to the network device based on the first indication information by using the target random access configuration.

In the random access method in this embodiment of this application, the network device indicates, in the first indication information, the terminal to determine the target random access configuration in the random access configuration. This helps satisfy requirements of some data or services, so that effective data transmission is performed between the terminal and the network device.

With reference to the first aspect, in some possible implementations of the first aspect, the first indication information indicates the target random access configuration.

In some possible implementations, the first indication information indicates a type of random access initiated by the terminal. When specifying the type of random access, the terminal may select a random access configuration of the type to initiate random access to the network device.

In some possible implementations, the first indication information indicates an index of the target random access configuration. When specifying the index of target random access configuration, the terminal may use the target random access configuration corresponding to the index to initiate random access to the network device.

In the random access method in this embodiment of this application, the network device may directly indicate, to the terminal, the type of to-be-initiated random access, and the terminal does not need to perform selection. This helps better satisfy requirements of some data or services, and simultaneously helps perform effective data transmission between the terminal and the network device.

With reference to the first aspect, in some possible implementations of the first aspect, the first indication information indicates an association relationship between a logical channel and the target random access configuration, and that the terminal initiates random access to the network device based on the first indication information by using the target random access configuration includes: The terminal determines the logical channel of to-be-transmitted data; and initiates random access to the network device based on the association relationship by using the target random access configuration associated with the logical channel.

In some possible implementations, different logical channels correspond to priorities of different data (or services).

Different data has different latency requirements. For latency-sensitive data, a faster random access process is required to satisfy a QoS requirement of the data. In this case, two-step random access may be selected to be used. For latency-insensitive data, two-step random access or four-step random access may be used. When determining whether to trigger two-step random access or four-step random access, the terminal may consider QoS (for example, a logical channel, where QoS of data carried on different logical channels are different) of data (or a service).

In the random access method in this embodiment of this application, the terminal may autonomously select a random access type based on the association relationship between the logical channel and the target random access configuration. This helps better satisfy requirements of some data or services, and also helps perform effective data transmission between the terminal and the network device.

With reference to the first aspect, in some possible implementations of the first aspect, that the terminal determines the logical channel of to-be-transmitted data includes: The terminal determines the logical channel based on a triggered scheduling request SR.

With reference to the first aspect, in some possible implementations of the first aspect, the first indication information indicates an association relationship between a QoS flow and the target random access configuration, and that the terminal initiates random access to the network device based on the first indication information by using the target random access configuration includes: The terminal determines the QoS flow of to-be-transmitted data; and initiates random access to the network device based on the association relationship by using the target random access configuration associated with the QoS flow.

In some possible implementations, the first indication information indicates an association relationship between an RB and the target random access configuration, and that the terminal initiates random access to the network device based on the first indication information by using the target random access configuration includes: The terminal determines the RB of to-be-transmitted data; and initiates random access to the network device based on the association relationship by using the target random access configuration associated with the RB.

In some possible implementations, the first indication information indicates an association relationship between a service identifier and the target random access configuration, and that the terminal initiates random access to the network device based on the first indication information by using the target random access configuration includes: The terminal determines the service identifier of to-be-transmitted data; and initiates random access to the network device based on the association relationship by using the target random access configuration associated with the service identifier.

With reference to the first aspect, in some possible implementations of the first aspect, the target random access configuration includes a two-step random access configuration and a four-step random access configuration, and that the terminal initiates random access to the network device includes: The terminal initiates two-step random access to the network device.

In this embodiment of this application, when the terminal is capable of selecting to initiate two-step random access or four-step random access, the terminal may preferably use two-step random access. This helps satisfy requirements of different data or services.

With reference to the first aspect, in some possible implementations of the first aspect, that the terminal initiates two-step random access to the network device includes: The terminal initiates two-step random access to the network device during running of a timer.

In this embodiment of this application, during the running of the timer, the terminal initiates two-step random access to the network device. This helps the terminal complete random access more quickly.

In some possible implementations, the timer is configured by the network device.

In some possible implementations, duration of the timer is configured by the network device.

In some possible implementations, a start moment of the timer may be that the timer is started after the terminal sends, to the network device, a MsgA (for example, a MsgA signal or a MsgA payload) of two-step random access for the first time on a time-frequency resource of two-step random access, or may be that the timer is started after the terminal determines to trigger two-step random access.

With reference to the first aspect, in some possible implementations of the first aspect, the method further includes: The terminal determines that there is no random access resource of the target random access configuration in a first bandwidth part BWP. The terminal switches from the first BWP to a second BWP, where there is the random access resource of the target random access configuration in the second BWP. That the terminal initiates random access to the network device includes: The terminal initiates random access to the network device in the second BWP by using the target random access configuration.

In this embodiment of this application, when the random access resource of the target random access configuration is not configured by the network device for an uplink BWP currently activated for the terminal, the terminal may perform BWP switching, so that the terminal switches to an uplink BWP for which the random access resource of the target random access configuration is configured by the network device. Therefore, the terminal initiates random access to the network device in a timely manner, to satisfy a QoS requirement of data or a service.

With reference to the first aspect, in some possible implementations of the first aspect, the second BWP is an initial BWP or a default BWP.

In some possible implementations, the second BWP may alternatively be another BWP in which there is the random access resource of the target random access configuration.

With reference to the first aspect, in some possible implementations of the first aspect, the random access configuration includes the first indication information.

In this embodiment of this application, the network device may carry the first indication information in the random access configuration, and deliver the random access configuration to the terminal. This helps reduce signaling overheads of the network device.

With reference to the first aspect, in some possible implementations of the first aspect, that the terminal receives first indication information from the network device includes: The terminal receives a logical channel configuration from the network device, where the logical channel configuration includes the first indication information; or receives an RB configuration from the network device, where the RB configuration includes the first indication information.

In this embodiment of this application, the network device may carry the first indication information in the logical channel configuration or the RB configuration, and deliver the logical channel configuration or the RB configuration to the terminal. This helps reduce signaling overheads of the network device.

With reference to the first aspect, in some possible implementations of the first aspect, the method further includes: The terminal receives second indication information from the network device, where the second indication information is used to indicate to initiate two-step contention-based random access or two-step contention-free random access.

According to a second aspect, a random access method is provided. The method includes: A network device sends a random access configuration to a terminal. The network device sends first indication information to the terminal, where the first indication information is used to determine a target random access configuration in the random access configuration. The network device receives random access initiated by the terminal by using the target random access configuration.

With reference to the second aspect, in some possible implementations of the second aspect, the first indication information indicates the target random access configuration.

With reference to the second aspect, in some possible implementations of the second aspect, the first indication information indicates an association relationship between a logical channel and the target random access configuration.

With reference to the second aspect, in some possible implementations of the second aspect, the first indication information indicates an association relationship between a QoS flow and the target random access configuration.

With reference to the second aspect, in some possible implementations of the second aspect, the target random access configuration includes a two-step random access configuration and a four-step random access configuration, and that the network device receives random access initiated by the terminal by using the target random access configuration includes: The network device receives two-step random access initiated by the terminal.

With reference to the second aspect, in some possible implementations of the second aspect, the random access configuration includes the first indication information.

With reference to the second aspect, in some possible implementations of the second aspect, that the network device sends first indication information to the terminal includes: The network device sends a logical channel configuration to the terminal, where the logical channel configuration includes the first indication information; or sends an RB configuration to the terminal, where the RB configuration includes the first indication information.

With reference to the second aspect, in some possible implementations of the second aspect, that the network device sends first indication information to the terminal includes: The network device sends an RRC connection reconfiguration message to the terminal, where the RRC connection reconfiguration message includes the first indication information; or sends an RRC reconfiguration message to the terminal, where the RRC reconfiguration message includes the first indication information.

In some possible implementations, before the network device sends the RRC connection reconfiguration message or the RRC reconfiguration message to the terminal, the method further includes: The network device receives a handover request acknowledge message sent by another network device, where the handover request acknowledge message includes the first indication information; or
the network device receives a secondary network device addition request acknowledge message sent by another network device, where the secondary network device addition request acknowledge message includes the first indication information; or
the network device receives a secondary network device modification request acknowledge message sent by another network device, where the secondary network device modification request acknowledge message includes the first indication information.

According to a third aspect, this application provides a random access apparatus, including units or means (means) configured to perform steps in the first aspect.

According to a fourth aspect, this application provides a random access apparatus, including units or means (means) configured to perform steps in the second aspect.

According to a fifth aspect, this application provides a random access apparatus, including at least one processor, where the at least one processor is configured to be connected to a memory, to invoke a program in the memory to perform the method provided in the first aspect. The memory may be located inside the apparatus, or may be located outside the apparatus. In addition, the processor includes one or more processors.

According to a sixth aspect, this application provides a random access apparatus, including at least one processor, where the at least one processor is configured to be connected to a memory, to invoke a program in the memory to perform the method provided in the second aspect. The memory may be located inside the apparatus, or may be located outside the apparatus. In addition, the processor includes one or more processors.

According to a seventh aspect, this application provides a random access apparatus, including at least one processor and an interface circuit, where the at least one processor is configured to perform the method provided in the first aspect.

According to an eighth aspect, this application provides a random access apparatus, including at least one processor and an interface circuit, where the at least one processor is configured to perform the method provided in the second aspect.

According to a ninth aspect, a terminal is provided. The terminal includes the apparatus provided in the third aspect, or the terminal includes the apparatus provided in the fifth aspect, or the terminal includes the apparatus provided in the seventh aspect.

According to a tenth aspect, a network device is provided. The network device includes the apparatus provided in the fourth aspect, or the network device includes the apparatus provided in the sixth aspect, or the network device includes the apparatus provided in the eighth aspect.

According to an eleventh aspect, this application provides a program, where when being executed by a processor, the program is used to perform the method provided in the first aspect.

According to a twelfth aspect, this application provides a program, where when being executed by a processor, the program is used to perform the method provided in the second aspect.

According to a thirteenth aspect, this application provides a program product, for example, a computer-readable storage medium, including the foregoing program.

It can be learned that, in the foregoing aspects, the network device indicates, in the first indication information, the terminal to determine the target random access configuration in the random access configuration. This helps satisfy requirements of some data or services, so that effective data transmission is performed between the terminal and the network device.

### BRIEF DESCRIPTION OF DRAWINGS

FIG. 1 is a schematic diagram of an application scenario of a technical solution according to an embodiment of this application;
FIG. 2 is another schematic diagram of an application scenario of a technical solution according to an embodiment of this application;
FIG. 3 is a schematic diagram of a network architecture according to an embodiment of this application;
FIG. 4 is a schematic diagram of another network architecture according to an embodiment of this application;
FIG. 5 is a schematic flowchart of four-step random access according to an embodiment of this application;
FIG. 6 is a schematic flowchart of two-step random access according to an embodiment of this application;
FIG. 7 is a schematic flowchart of a random access method according to an embodiment of this application;
FIG. 8 is another schematic flowchart of a random access method according to an embodiment of this application;
FIG. 9 is another schematic flowchart of a random access method according to an embodiment of this application;
FIG. 10 is another schematic flowchart of a random access method according to an embodiment of this application;
FIG. 11 is a schematic block diagram of a random access apparatus according to an embodiment of this application;
FIG. 12 is another schematic block diagram of a random access apparatus according to an embodiment of this application;
FIG. 13 is a schematic structural diagram of a terminal according to an embodiment of this application;
FIG. 14 is a schematic structural diagram of a network device according to an embodiment of this application;
FIG. 15 is another schematic structural diagram of a network device according to an embodiment of this application;
FIG. 16 is a schematic diagram of a preamble index according to an embodiment of this application;
FIG. 17 is a schematic diagram of another preamble index according to an embodiment of this application;
FIG. 18 is a schematic flowchart in which a network device indicates a random access type to a terminal by using an RRC message according to an embodiment of this application;
FIG. 19 is another schematic flowchart in which a network device indicates a random access type to a terminal by using an RRC message according to an embodiment of this application;
FIG. 20 is a schematic flowchart of two-step CFRA and four-step CFRA;
FIG. 21 is a schematic diagram of a mapping relationship between a preamble index and a PRACH resource according to an embodiment of this application; and
FIG. 22 is a schematic flowchart in which a terminal determines a random access type according to an embodiment of this application.

### DESCRIPTION OF EMBODIMENTS

The following describes some terms in this application.
(1) A terminal is also referred to as user equipment (user equipment, UE), a mobile station (mobile station, MS), a mobile terminal (mobile terminal, MT), or the like, and is a device that provides voice/data connectivity for a user, for example, a handheld device or a vehicle-mounted device with a wireless connection function. Currently, some examples of the terminal are: a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), or a wireless terminal in a smart home (smart home).
(2) A network device is a device in a wireless network, for example, a radio access network (radio access network, RAN) node that enables a terminal to access the wireless network. Currently, some examples of the RAN node are a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), and the like. In a network structure, the network device may include a centralized unit (centralized unit, CU) node, a distributed unit (distributed unit, DU) node, or a RAN device including a CU node and a DU node.
(3) "A plurality of' indicates two or more, and another quantifier is similar to this. The term "and/or" describes an association relationship for describing associated objects and represents that three relationships may exist. For example, A and/or B may represent the following three cases: Only A exists, both A and B exist, and only B exists. In addition, an element (element) that appears in singular forms "a", "an", and "the" does not mean "one or only one" unless otherwise specified in the context, but means "one or more". For example, "a device" means one or more such devices. Further, "at least one (at least one of)..." means one or any combination of subsequent associated objects. For example, "at least one of A, B, and C" includes A, B, C, AB, AC, BC, or ABC.

Technical solutions in embodiments of this application may be applied to various communications systems such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS) system, a worldwide interoperability for microwave access (worldwide interoperability for microwave access, WiMAX) communications system, a 5th generation (5th generation, 5G) system, or a new radio (new radio, NR) system.

In the embodiments of this application, the terminal or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (which is also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant communication software. In addition, a specific structure of an execution body of a method provided in the embodiments of this application is not specifically limited in the embodiments of this application, provided that a program that records code for the method provided in the embodiments of this application can be run to perform communication according to the method provided in the embodiments of this application. For example, the method provided in the embodiments of this application may be performed by a terminal, a network device, or a function module that is in the terminal or the network device and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to a magnetic storage component (for example, a hard disk, a floppy disk, or a magnetic tape), an optical disc (for example, a compact disc (compact disc, CD), or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but are not limited to a radio channel and various other media that can store, include, and/or carry instructions and/or data.

Before the embodiments of this application are described, several concepts related to the technical solutions in the embodiments of this application are first briefly described.

A bandwidth part (bandwidth part, BWP) is a part of frequency domain resources on carrier bandwidth allocated by a network device to a terminal. A size of the BWP is less than or equal to a bandwidth capability of the terminal, that is, a maximum bandwidth supported by the terminal. The BWP may be consecutive frequency domain resources. For example, the BWP may include a plurality of consecutive subcarriers. For another example, the BWP may include a plurality of consecutive physical resource blocks (physical resource block, PRB). Alternatively, the BWP may be nonconsecutive frequency domain resources. The consecutive frequency domain resources help reduce resource allocation complexity, and the nonconsecutive frequency domain resources help utilize discrete resources. The terminal may support a plurality of BWPs, that is, the network device may configure a plurality of BWPs for the terminal. When the plurality of BWPs are configured, the BWPs may overlap each other, or the BWPs may not overlap each other. In addition, frequency domain resources included in different BWPs may have a same subcarrier spacing or may have different subcarrier spacings.

An initial bandwidth part (initial bandwidth part, initial BWP) is a BWP for a terminal to initially access a network. The terminal initiated initial access in the initial BWP. A default bandwidth part (default bandwidth part, default BWP) is indicated by a network device to a terminal.

Modulation and coding scheme (modulation and coding scheme, MCS): The modulation and coding scheme indicates a modulation (modulation) scheme and a code rate of channel coding that are used for transmission. Generally, an MCS index (index) is used as a row, a corresponding group of a modulation scheme and a code rate of channel coding is used as a corresponding column, and the modulation scheme and the channel code rate that are used for transmission are determined by using the MCS index. Further, a transport block size (transport block size, TBS) is determined.

Synchronization signal and physical broadcast channel block (synchronization signal and PBCH block, SS/PBCH block):
A time domain position of a primary synchronization signal (primary synchronization signal, PSS), a frequency domain position of a secondary synchronization signal (secondary synchronization signal, SSS) and a frequency domain position of a physical broadcast channel (physical broadcast channel, PBCH) block in LTE are different from those in NR.

The SS/PBCH block may also be referred to as an SSB, and includes a synchronization signal/physical broadcast channel. One SSB includes a primary synchronization signal, a secondary synchronization signal, and a physical broadcast channel (physical broadcast channel, PBCH). The PSS is mainly used for coarse synchronization, the SSS is used for fine synchronization and SSB-based measurement, and the PBCH is used to broadcast cell-level system information. A demodulation reference signal (demodulation reference signal, DMRS) is used to demodulate the PBCH, and may also be used for SSB-based measurement.

It should be understood that, in the following embodiments, terms such as "first" and "second" are merely intended to distinguish between different objects, and should not constitute any limitation on this application.

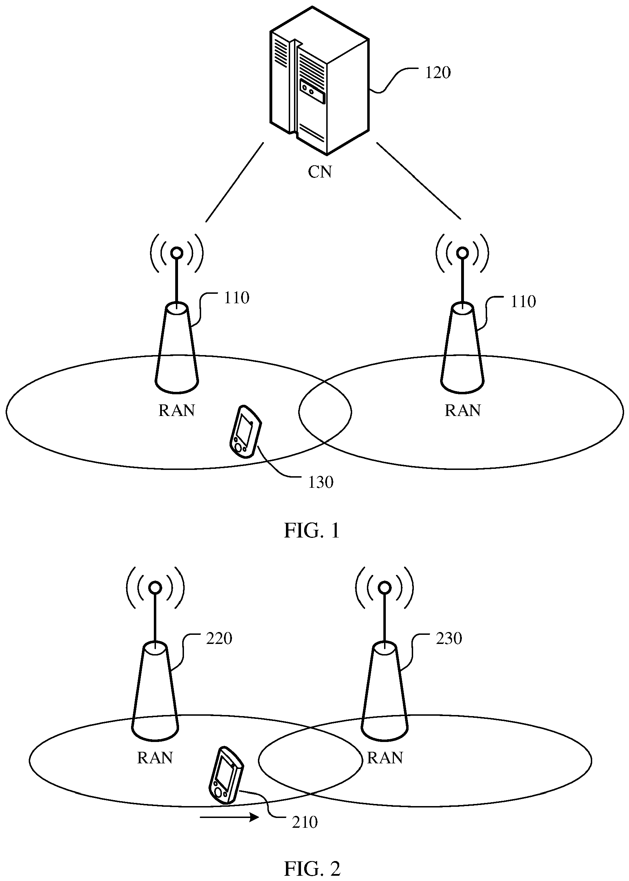

FIG. 1 is a schematic diagram of an application scenario of a technical solution according to an embodiment of this application. As shown in FIG. 1, a terminal 130 accesses a wireless network, to obtain a service of an external network (for example, the Internet) by using the wireless network, or communicate with another terminal by using the wireless network. The wireless network includes a RAN 110 and a core network (CN) 120. The RAN 110 is used to enable the terminal 130 to access the wireless network, and the CN 120 is used to manage the terminal and provide a gateway for communicating with the external network.

It should be understood that a random access method provided in this application is applicable to a wireless communications system, for example, a wireless communications system 100 shown in FIG. 1. There is a wireless communication connection between two communications apparatuses in the wireless communications system. One of the two communications apparatuses may correspond to the terminal 130 shown in FIG. 1, for example, may be the terminal 130 in FIG. 1, or may be a chip configured in the terminal 130. The other communications apparatus in the two communications apparatuses may correspond to the RAN 110 shown in FIG. 1, for example, may be the RAN 110 in FIG. 1, or may be a chip configured in the RAN 110.

FIG. 2 is another schematic diagram of an application scenario of a technical solution according to an embodiment of this application. As shown in FIG. 2, when a terminal 210 is handed over from a RAN 220 to a RAN 230, the terminal 210 may receive an RRC connection reconfiguration message or an RRC reconfiguration message sent by the RAN 220, and then the terminal 210 initiates random access to the RAN 230. For example, both the RAN 220 and the RAN 230 are primary network devices.

Alternatively, when a primary secondary cell (primary secondary cell, PScell) of the terminal 210 changes from a first cell served by the RAN 220 to a second cell served by the RAN 230, the terminal 210 may receive an RRC connection reconfiguration message or an RRC reconfiguration message sent by the RAN 220. For example, both the RAN 220 and the RAN 230 are secondary network devices.

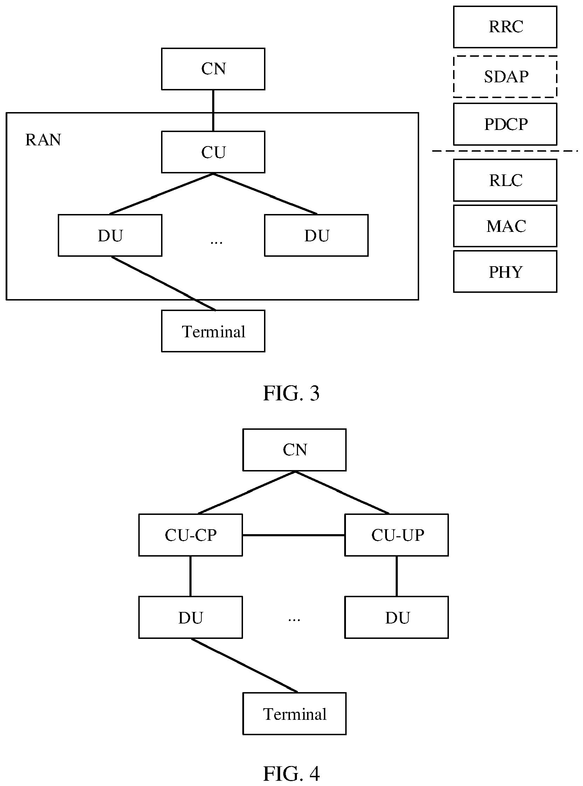

FIG. 3 is a schematic diagram of a network architecture according to an embodiment of this application. As shown in FIG. 3, the network architecture includes a CN device and a RAN device. The RAN device includes a baseband apparatus and a radio frequency apparatus. The baseband apparatus may be implemented by one node, or may be implemented by a plurality of nodes. The radio frequency apparatus may be independently implemented remotely from the baseband apparatus, or may be integrated into the baseband apparatus, or a part of the radio frequency apparatus is implemented remotely from the baseband apparatus and a remaining part is integrated into the baseband apparatus. For example, in a long term evolution (Long Term Evolution, LTE) communications system, a RAN device (eNB) includes a baseband apparatus and a radio frequency apparatus. The radio frequency apparatus may be remotely disposed relative to the baseband apparatus. For example, a remote radio unit (remote radio unit, RRU) is remotely disposed relative to a BBU.

Communication between the RAN device and a terminal complies with a specified protocol layer structure. For example, a control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. A user plane protocol layer structure may include functions of protocol layers such as a PDCP layer, an RLC layer, a MAC layer, and a physical layer. In an implementation, a service data adaptation protocol (service data adaptation protocol, SDAP) layer may be further included above the PDCP layer.

The RAN device may implement the functions of the protocol layers such as the radio resource control (radio resource control, RRC) layer, the packet data convergence protocol (packet data convergence protocol, PDCP) layer, the radio link control (radio link control, RLC) layer, and the media access control (media access control, MAC) layer by using one node. Alternatively, the functions of these protocol layers may be implemented by using a plurality of nodes. For example, in an evolved structure, the RAN device may include a centralized unit (centralized unit, CU) and a distributed unit (distributed unit, DU), and a plurality of DUs may be centrally controlled by one CU. As shown in FIG. 3, the CU and the DU may be divided based on protocol layers of a wireless network. For example, functions of the PDCP layer and a protocol layer above the PDCP layer are set on the CU, and functions of protocol layers below the PDCP layer, such as the RLC layer and the MAC layer, are set on the DU.

Division into the protocol layers is merely an example, and division may alternatively be performed at another protocol layer, for example, the RLC layer. Functions of the RLC layer and a protocol layer above the RLC layer are set on the CU, and a function of a protocol layer below the RLC layer are set on the DU. Alternatively, division is performed in a protocol layer, for example, a part of functions of the RLC layer and a function of a protocol layer above the RLC layer are set on the CU, and a remaining function of the RLC layer and a function of a protocol layer below the RLC layer are set on the DU. In addition, division may alternatively be performed in another manner. For example, division is performed based on a latency. A function whose processing time needs to satisfy a latency requirement is set on the DU, and a function whose processing time does not need to satisfy the latency requirement is set on the CU.

In addition, the radio frequency apparatus may be not placed in the DU but is placed remotely from the DU, or may be integrated into the DU, or a part is placed remotely from the DU and a remaining part is integrated into the DU. This is not limited herein.

FIG. 4 is a schematic diagram of another network architecture according to an embodiment of this application. Compared with the architecture shown in FIG. 3, a control plane (CP) and a user plane (UP) of a CU may be further separated into different entities for implementation, and the different entities are a control plane CU entity (CU-CP entity) and a user plane CU entity (CU-UP entity).

In the foregoing network architecture, signaling generated by the CU may be sent to a terminal by using the DU, or signaling generated by the terminal may be sent to the CU by using the DU. The DU may transparently transmit the signaling to the terminal or the CU by directly encapsulating the signaling at a protocol layer without parsing the signaling. In the following embodiments, if such transmission of signaling between the DU and the terminal is involved, that the DU sends or receives the signaling includes this scenario. For example, signaling at an RRC layer or a PDCP layer is finally processed as signaling at a PHY layer and sent to the terminal, or is converted from received signaling at the PHY layer. In the architecture, the signaling at the RRC layer or the PDCP layer may further be considered to be sent by the DU, or sent by the DU and a radio frequency apparatus.

In the foregoing embodiments, the CU is classified as a network device on a RAN side. In addition, the CU may alternatively be classified as a network device on a CN side. This is not limited herein.

An apparatus in the following embodiments of this application may be located in a terminal based on functions implemented by the apparatus. When the foregoing CU-DU structure is used, the network device may be a CU node, a DU node, or a RAN device including a CU node and a DU node.

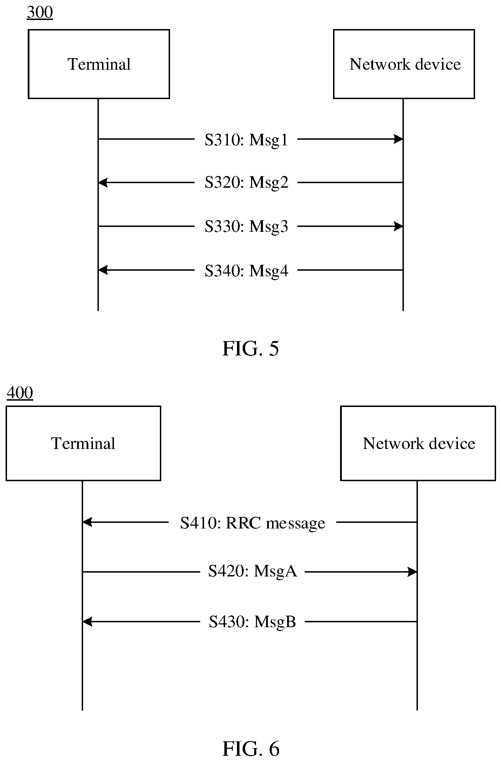

FIG. 5 is a schematic flowchart of four-step random access (four-step random access) between a terminal and a network device. It should be understood that, in FIG. 5, contention-based random access (contention-based random access, CBRA) is used as an example, and the process includes the following steps.

S310: The terminal sends a random access process message 1 (Msg1) to the network device.

It should be understood that the random access process message 1 (Msg1) may also be referred to as a random access request message or a random access preamble sequence (preamble).

A main function of the preamble is to notify the network device that there is a random access request, and enable the network device to estimate a transmission latency between the network device and the terminal. This helps the network device calibrate uplink timing and notify the terminal of calibration information through a random access process message 2 (Msg2) in S320.

A maximum quantity of available preambles in each cell may be limited. For example, each cell has a maximum of 64 available preamble sequences. The terminal may select a preamble, and transmit the preamble on a physical random access channel (physical random access channel, PRACH). The network device notifies, through a system message, the terminal of a time-frequency resource set of a PRACH that can be used to transmit the preamble in a current cell. When initiating random access, the terminal selects a PRACH resource, to send the preamble.

S320: The network device sends the random access process message 2 (Msg2) to the terminal.

It should be understood that the random access process message 2 (Msg2) may also be referred to as a random access response message.

Specifically, after receiving the preamble sent by the terminal, the network device sends a corresponding random access response (RA response, RAR) to the terminal. The random access response may include at least one of the following parameters: uplink grant (uplink grant, UL grant) information, a preamble identifier, and timing advance (TA) information. The uplink grant information may include time-frequency domain information for transmitting a random access process message 3 (Msg3) in S330, a modulation and coding scheme used for the Msg3, and the like. In addition, the RAR may further carry identifier information of the terminal. For the CBRA, after receiving the Msg2, the terminal determines whether the preamble identifier in the Msg2 is the same as that of the preamble sent in S310. If the preamble identifier in the Msg2 is the same as that of the preamble sent in S310, it is considered that the Msg2 is successfully received; and if the preamble identifier in the Msg2 is not the same as that of the preamble sent in S310, it is considered that the Msg2 fails to be received, and the terminal may re-initiate four-step random access.

S330: The terminal sends the random access process message 3 (Msg3) to the network device.

Specifically, the terminal sends data, namely, the Msg3, on a corresponding uplink transmission resource through a physical uplink shared channel (physical uplink shared channel, PUSCH) based on the UL grant information indicated in the Msg2. The data may include a radio resource control (radio resource control, RRC) message and the identifier information of the terminal, for example, C-RNTI information of the terminal, or a resume identifier (Resume ID) or an inactive radio network temporary identifier (inactive RNTI, I-RNTI) of the terminal. The resume ID or the I-RNTI is allocated by the network device to the terminal, and the terminal reports the identifier, so that the network device identifies an identity of the terminal and related configuration information.

The Msg3 may be transmitted on an uplink shared channel (uplink shared channel, UL-SCH), and includes a cell radio network temporary identifier media access control control element (cell radio network temporary identifier media access control control element, C-RNTI MAC CE) or a common control channel service data unit (common control channel service data unit, CCCH SDU). The CCCH SDU is associated with a contention resolution identity of the terminal. The CCCH SDU may be an RRC message. For example, if the random access is initial access, the RRC message is an RRC connection establishment request. If the random access is initiated due to RRC connection re-establishment, the RRC message is an RRC connection re-establishment request. If the random access is initiated because system information is requested, the RRC message is an RRC system information request. If the random access is initiated due to switching from an inactive (RRC_INACTIVE) state to a connected (RRC_CONNECTED) state, the RRC message is an RRC resume request.

S340: The network device sends a random access process message 4 (Msg4) to the terminal.

Specifically, because in S330, the terminal includes the identifier information or the contention resolution identity of the terminal, in a conflict resolution mechanism, the network device includes the identifier information or the contention resolution identity of the terminal in the Msg4 in S340, to specify a terminal that wins in conflict resolution, and another terminal that does not win in the conflict resolution re-initiates random access.

FIG. 6 is a schematic flowchart of two-step random access (two-step random access) between a terminal and a network device, and the process includes the following steps.

S410: The network device sends an RRC message to the terminal.

It should be understood that the RRC message may be sent to the terminal in a broadcast manner (for example, through a system message), or may be sent to the terminal through RRC dedicated signaling.

Specifically, the RRC message may include UL grant information, for example, may include time-frequency domain information for transmitting a random access process message A (MsgA) payload (payload) in S420, a modulation and coding scheme used for the MsgA payload, and the like.

S420: The terminal sends the random access process message A (MsgA) to the network device.

It should be understood that the random access process message A (MsgA) may also be referred to as a random access request message. The message A (MsgA) includes a MsgA signal and the MsgA payload, and the MsgA signal may include at least one of the following signals.
(1) Preamble: Optionally, the network device may further perform channel estimation or slot boundary determining based on the preamble, to perform receive end signal processing of data.
(2) Demodulation reference signal (demodulation reference signal, DMRS): The demodulation reference signal is used for related receive end signal processing such as data demodulation. The DMRS may not be sent, or may be sent together with the preamble, or may replace the preamble to initiate random access.

The message A (MsgA) payload includes at least one of the following data types.
(1) User plane data: The user plane data includes to-be-sent data of a user. When at least one logical channel is configured for the terminal, the user plane data may include data of the at least one logical channel.
(2) RRC message: The RRC message includes identifier information of the terminal, for example, C-RNTI information of the terminal, and a resume identifier (Resume ID) or an inactive identifier (inactive RNTI, I-RNTI) of the terminal. The resume ID or the I-RNTI is allocated by the network device to the terminal, and the terminal reports the identifier, so that the network device identifies an identity of the terminal and related configuration information.
(3) Media access control control element (media access control control element, MAC CE): When S420 is triggered by an event of a connected state or triggered by RRC re-establishment, the message A may carry a C-RNTI MAC CE for contention resolution.

It should be understood that for the MsgA payload, refer to the Msg3 in the method 300 in FIG. 5. For brevity, details are not described herein again. When the terminal is in the connected state and the user plane data is to be sent, the message A payload may include the user plane data. In addition, for a contention-free random access process, the preamble may be used to identify the terminal. In this case, the RRC message and the MAC CE may not be carried, in other words, information for contention resolution is not carried. In addition, the MsgA may include both the user plane data and the RRC message, or include both the user plane data and the MAC CE. Specific content depends on an event that triggers random access.

Specifically, the terminal sends data (the message A payload) on a corresponding uplink transmission resource through a physical layer channel based on the UL grant information indicated in the RRC message in S410. The physical layer channel may be a PUSCH, or may be a contention-based physical layer channel different from the PUSCH. This is not limited herein.

S430: The network device sends a random access process message B (MsgB) to the terminal.

It should be understood that the random access process message B (MsgB) may also be referred to as a random access response message.

Specifically, after receiving the MsgA sent by the terminal, the network device sends a corresponding random access response (RA response, RAR) to the terminal. Optionally, the network device may further send an RRC message. The RAR and the RRC message may include at least one of the following parameters: a preamble identifier, timing advance (TA) information, and the uplink grant (uplink grant, UL grant) information. In addition, the identifier information of the terminal may be further carried.

Optionally, if the MsgB includes the preamble identifier, after receiving the MsgB, the terminal determines whether the preamble identifier in the MsgB is the same as that of the preamble sent in S420. If the preamble identifier in the MsgB is the same as that of the preamble sent in S420, it is considered that the MsgB is successfully received; and if the preamble identifier in the MsgB is not the same as that of the preamble sent in S420, it is considered that the MsgB fails to be received, and the terminal may initiate two-step random access.

Optionally, if the MsgB includes a contention resolution identity of the terminal, when the message A payload includes the RRC message, the contention resolution identity may be obtained based on the RRC message sent in S420. For example, the contention resolution identity may be all or a part of content of the RRC message. When the message A includes the C-RNTI MAC CE for contention resolution, the contention resolution identity may be obtained based on the C-RNTI MAC CE. When the message A includes neither the RRC message nor the C-RNTI MAC CE, the network device may identify the terminal based on the preamble. In this case, the contention resolution identity may be an identifier of the terminal, for example, a C-RNTI. After receiving the MsgB, the terminal determines whether the contention resolution identity of the terminal in the MsgB matches a part or all of content of the message A payload sent in S420 or matches the identifier of the terminal. If the contention resolution identity matches the part or all of the content of the message A payload or the identifier of the terminal, it is considered that the MsgA is successfully sent. For example, the contention resolution identity in the message B may be 48 bits (bits), and the RRC message in the message A may be 72 bits (bits). When performing matching, the terminal compares the 48 bits of the contention resolution identity with the first 48 bits of the RRC message.

In this embodiment of this application, when the terminal supports a plurality of random access types, for different data or services, an appropriate random access type may be determined by using indication information configured by the network device to initiate random access to the network device, to satisfy requirements of the different data or services, so that effective data transmission is performed between the terminal and the network device.

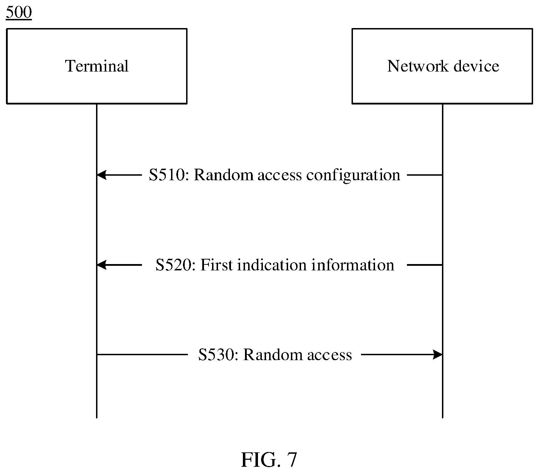

FIG. 7 is a schematic flowchart of a random access method 500 according to an embodiment of this application. As shown in FIG. 7, the method 500 may be performed by a random access apparatus (for example, a terminal or a chip or an apparatus of the terminal). The method 500 includes the following steps.

S510: The terminal receives a random access configuration from a network device.

Optionally, the random access configuration includes a two-step random access configuration and/or a four-step random access configuration.

Optionally, when the random access configuration includes the two-step random access configuration, the two-step random access configuration may include one or more configurations.

Optionally, when the random access configuration includes the four-step random access configuration, the four-step random access configuration may include one or more configurations.

For example, Table 1 shows a random access configuration.

**Table 1: Random access configuration**

| Type | Configuration |
|---|---|
| Two-step random access | Configuration 1 |
| | Configuration 2 |
| | ... |
| Four-step random access | Configuration 3 |
| | Configuration 4 |
| | ... |

For example, Table 2 shows another random access configuration.

**Table 2: Another random access configuration**

| Type | Configuration |
|---|---|
| Two-step random access | Configuration 1 |
| Four-step random access | Configuration 3 |
| | Configuration 4 |
| | ... |

For example, Table 3 shows another random access configuration.

**Table 3: Another random access configuration**

| Type | Configuration |
|---|---|
| Two-step random access | Configuration 1 |
| | Configuration 2 |
| | ... |
| Four-step random access | Configuration 3 |

For example, Table 4 shows another random access configuration.

**Table 4: Another random access configuration**

| Type | Configuration |
|---|---|
| Two-step random access | Configuration 1 |
| Four-step random access | Configuration 3 |

For example, Table 5 shows another random access configuration.

**Table 5: Another random access configuration**

| Type | Configuration |
|---|---|
| Two-step random access | Configuration 1 |
| | Configuration 2 |
| | ... |

For example, Table 6 shows another random access configuration.

**Table 6: Another random access configuration**

| Type | Configuration |
|---|---|
| Four-step random access | Configuration 3 |
| | Configuration 4 |
| | ... |

For example, Table 7 shows another random access configuration.

**Table 7: Another random access configuration**

| Type | Configuration |
|---|---|
| Two-step random access | Configuration 1 |

For example, Table 8 shows another random access configuration.

**Table 8: Another random access configuration**

| Type | Configuration |
|---|---|
| Four-step random access | Configuration 3 |

Optionally, the random access configuration may include at least one of the following:
(1) indication information of a preamble time-frequency resource;
(2) indication information of a preamble index; and
(3) indication information of a root sequence (root).

It should be understood that (1) to (3) may also be referred to as a random access parameter set.

Optionally, when the random access configuration includes the two-step random access configuration, the two-step random access configuration may further include an uplink grant (UL grant). The UL grant includes at least one of a frequency domain resource, a modulation and coding scheme, and a time domain resource, and is used to send a MsgA payload (payload). The UL grant may be referred to as a PUSCH configuration.

It should be understood that for the MsgA payload, refer to the descriptions in the method 400 in FIG. 6. For brevity, details are not described herein again.

Optionally, there may be a correspondence between a random access parameter set and a PUSCH configuration, and the correspondence may be a one-to-one correspondence or a one-to-many correspondence.

For example, a random access parameter set 1 corresponds to a UL grant 1, and a random access parameter set 2 corresponds to a UL grant 2.

For example, Table 9 shows a two-step random access configuration.

**Table 9: Two-step random access configuration**

| Configuration | Included information |
|---|---|
| Configuration 1 | Random access parameter set 1, UL grant 1 |
| Configuration 2 | Random access parameter set 2, UL grant 2 |
| ... | ... |

Optionally, the random access configuration includes at least one two-step random access configuration.

S520: The terminal receives first indication information from the network device, where the first indication information is used to determine a target random access configuration in the random access configuration.

Specifically, the network device sends the first indication information to the terminal, where the first indication information includes information used to determine the target random access configuration in the random access configuration.

Optionally, the random access configuration includes the first indication information. For example, the first indication information is added to the random access configuration, where the first indication information indicates a random access type of the random access configuration. The type may be the two-step random access, the four-step random access, or two-step and four-step random access, and identifies that the random access configuration may support the two-step random access, the four-step random access, or both the two-step random access and the four-step random access. For another example, a plurality of random access configurations are configured in a random access configuration message, and the first indication information is added to the message. The first indication information indicates a random access configuration to be used in the plurality of random access configurations. For example, configurations 1 to N are configured in the random access configuration message, where N is a positive integer greater than 1. The first indication information indicates a configuration M, where M is any integer from 1 to N. For another example, the first indication information is added to the random access configuration, where the first indication information indicates a logical channel identifier, an RB identifier, a service identifier, or a QoS flow identifier. The QoS flow identifier may be a 5G quality of service identifier (5G QoS identifier, 5QI) or a vehicle quality of service identifier (vehicle QoS identifier, VQI). In this way, an association relationship between a random access configuration and a logical channel, an RB, a service, or a QoS flow may be indicated. After receiving the random access configuration, the terminal may learn of the association relationship between a random access configuration and a logical channel, an RB, a service, or a QoS flow, to select an appropriate random access configuration for random access.

Optionally, that the terminal receives first indication information from the network device includes the following step:
The terminal receives a logical channel configuration sent by the network device, where the logical channel configuration includes the first indication information. For example, an index or the random access type of the random access configuration is added to the logical channel configuration. In this case, the first indication information indicates the index or the random access type of the random access configuration. Alternatively, the terminal receives an RB configuration sent by the network device, where the RB configuration includes the first indication information. For example, an index or the random access type of the random access configuration is added to the RB configuration. In this case, the first indication information indicates the index or the random access type of the random access configuration.

The logical channel configuration may further include one or more of the following information:
(1) a logical channel priority (logic channel priority);
(2) an allowed serving cell (allowed serving cell);
(3) an allowed subcarrier spacing list (allowed SCS list);
(4) maximum PUSCH duration (max PUSCH duration);
(5) a prioritized bit rate (prioritized bit rate);
(6) token bucket duration (token bucket duration);
(7) a logical channel group (logical channel group); and
(8) a scheduling request identifier (scheduling request ID).

In this embodiment of this application, the first indication information may be carried in the random access configuration, or may be carried in the logical channel configuration or the RB configuration, and delivered to the terminal. This helps reduce signaling overheads.

Optionally, the first indication information is used to indicate an association relationship between a logical channel (logical channel, LCH) and a target random access configuration.

For example, Table 10 shows an association relationship between an LCH and a random access configuration.

**Table 10: Association relationship between an LCH and a random access configuration**

| Logical Channel (LCH) | Random access configuration |
|---|---|
| LCH 1 | Two-step random access configuration |
| | Four-step random access configuration |
| LCH 2 | Two-step random access configuration |
| LCH 3 | Four-step random access configuration |
| ... | ... |

It should be understood that the foregoing merely uses the LCH as an example for description. The first indication information may alternatively be used to indicate an association relationship between a radio bearer (radio bearer, RB) and a target random access configuration. The RB may be a signaling radio bearer (signaling radio bearer, SRB), a data radio bearer (data radio bearer, DRB), or a sidelink radio bearer (sidelink radio bearer, SLRB). Alternatively, the first indication information may be used to indicate an association relationship between a quality of service (quality of service, QoS) flow and a target random access configuration. Alternatively, the first indication information may be used to indicate an association relationship between a service identifier and a target random access configuration.

Optionally, the QoS flow may be the 5G quality of service identifier (5G QoS identifier, 5QI) or the vehicle quality of service identifier (vehicle QoS identifier, VQI).

It should be further understood that when the first indication information indicates the association relationship between a target random access configuration and an LCH (or an RB, a QoS flow, or a service identifier), the terminal may determine the target random access configuration based on the first indication information, and initiate random access to the network device by using the target random access configuration.

Optionally, the first indication information indicates the target random access configuration.

Specifically, the network device may directly indicate the target random access configuration in the first indication information. After receiving the first indication information, the terminal directly initiates random access to the network device based on the target random access configuration indicated in the first indication information.

The first indication information may indicate the target random access configuration in the following two manners.
(1) The network device configures the random access configuration (for example, the two-step random access configuration and/or the four-step random access configuration) to the terminal, and the terminal stores the random access configuration. The first indication information may indicate the random access type, and the terminal determines, based on the random access type, the target random access configuration corresponding to the type.
   For example, the first indication information indicates the terminal to initiate two-step random access, where the two-step random access includes a configuration 1 and a configuration 2. The terminal may initiate two-step random access to the network device by using either of the configuration 1 and the configuration 2.
(2) The first indication information directly indicates the target random access configuration, for example, may indicate an index of the configuration.

For example, the random access configuration is shown in Table 1. The first indication information may indicate the index of the target random access configuration. For example, when the first indication information indicates an index 2, the terminal may initiate two-step random access to the network device by using the configuration 2.

S530: The terminal initiates random access to the network device based on the first indication information by using the target random access configuration.

Specifically, after receiving the first indication information, the terminal may determine the target random access configuration based on the first indication information, and initiate random access to the network device by using the target random access configuration.

It should be understood that, for a process in which the terminal initiates two-step random access or four-step random access, refer to the method 300 or the method 400. For brevity, details are not described herein again.

Optionally, when the first indication information indicates the association relationship between a logical channel and a target random access configuration, that the terminal initiates random access to the network device based on the first indication information by using the target random access configuration includes the following steps:

The terminal determines a logical channel of to-be-transmitted data.

The terminal initiates random access to the network device based on the association relationship by using the target random access configuration associated with the logical channel.

Optionally, the to-be-transmitted data includes data of an SRB, a DRB, or a sidelink radio bearer (sidelink radio bearer, SLRB).

Optionally, that the terminal determines a logical channel of to-be-transmitted data includes the following step:

The terminal determines the logical channel based on a triggered scheduling request (scheduling request, SR).

Specifically, the terminal may trigger the scheduling request, determine, based on the logical channel corresponding to the scheduling request and the association relationship, the target random access configuration associated with the logical channel, and initiate random access to the network device by using the target random access configuration.

Optionally, a case of triggering the scheduling request may include but is not limited to the following several cases.
(1) When there is no uplink data to be currently transmitted by the terminal, uplink data arrives.
(2) When there is uplink data to be currently transmitted by the terminal, data with a higher priority arrives.

Because the uplink data is transmitted on a logical channel, the uplink data corresponds to the logical channel. In this case, the triggered scheduling request corresponds to a logical channel.

For example, an LCH 1 is associated with the two-step random access configuration and the four-step random access configuration, and an LCH 2 is associated with the two-step random access configuration. If a logical channel of the triggered SR is the logical channel 2, the terminal may initiate two-step random access to the network device by using the two-step random access configuration.

Optionally, when the target random access configuration includes the two-step random access configuration and the four-step random access configuration, that the terminal initiates random access to the network device includes the following step:

The terminal initiates two-step random access to the network device.

For example, an LCH 1 is associated with the two-step random access configuration and the four-step random access configuration, and an LCH 2 is associated with the two-step random access configuration. If a logical channel of the triggered SR is the logical channel 1, the terminal may initiate two-step random access to the network device by preferably using the two-step random access configuration.

Optionally, that the terminal initiates two-step random access to the network device includes the following step:

The terminal initiates two-step random access to the network device during running of a timer.

For example, the network device may configure the timer. During running of the timer, the terminal can use only the two-step random access configuration to initiate two-step random access to the network device (for example, send a preamble of the two-step random access to the network device on a time-frequency resource of the two-step random access). After the timer expires, the terminal may use the four-step random access configuration to initiate four-step random access to the network device (for example, send a preamble of the four-step random access to the network device on a time-frequency resource of the four-step random access).

Optionally, duration of the timer is configured by the network device.

Optionally, a start moment of the timer may be that the timer is started after the terminal sends, to the network device, a MsgA (for example, a MsgA signal or the MsgA payload) of the two-step random access for the first time on the time-frequency resource of the two-step random access, or may be that the timer is started after the terminal determines to trigger the two-step random access.

It should be understood that, when the terminal triggers the scheduling request, if no physical uplink control channel (physical uplink control channel, PUCCH) is available to the scheduling request to trigger a random access process, whether the terminal specifically selects the two-step random access or the four-step random access may depend on the previously configured association relationship.

It should be further understood that, when the terminal triggers the scheduling request, if a quantity of transmissions of the scheduling request on a PUCCH reaches a maximum quantity, the terminal may also trigger random access. Whether the terminal specifically selects the two-step random access or the four-step random access may also depend on the previously configured association relationship.

Optionally, when the first indication information indicates the target random access configuration, the terminal may directly initiate random access to the network device based on the target random access configuration.

Optionally, the network device directly indicates the random access type or the target random access configuration in the following several scenarios.
(1) Downlink data arrives at the network device, but uplink out-of-synchronization occurs on the terminal;
(2) The terminal is handed over from one network device to another network device or a secondary cell group (secondary cell group, SCG) changes.

In the foregoing scenarios, the network device needs to trigger the terminal to initiate the random access process. Different downlink data has different latency requirements. For latency-sensitive data, a faster random access process is required to satisfy a QoS requirement of the data. In this case, the two-step random access may be selected. For latency-insensitive data, the two-step random access or the four-step random access may be performed.

Optionally, the method 500 further includes the following steps:

The terminal determines that there is no random access resource of the target random access configuration in a first BWP.

The terminal switches from the first BWP to a second BWP, where there is the random access resource of the target random access configuration in the second BWP.

That the terminal initiates random access to the network device by using the target random access configuration includes the following step:

The terminal initiates random access to the network device in the second BWP by using the target random access configuration.

For example, if the terminal determines, based on the association relationship, to initiate two-step random access, or the network device indicates the terminal to initiate two-step random access, but no random access resource of the two-step random access is configured by the network device for the currently activated first BWP, the terminal may perform BWP switching, and switch from the activated BWP to the second BWP for which the random access resource of the two-step random access is configured by the network device. The terminal initiates two-step random access to the network device in the second BWP.

Optionally, the second BWP may be an initial BWP, a default BWP, or another BWP for which a random access resource of a corresponding random access type is configured by the network device.

Optionally, the method 500 further includes the following step:

The terminal receives second indication information sent by the network device, where the second indication information is used to indicate to initiate two-step contention-based random access or two-step contention-free random access.

Specifically, if the terminal determines, based on the association relationship, to initiate two-step random access, or the network device indicates the terminal to initiate two-step random access, the terminal may further determine, based on the second indication information, to initiate two-step contention-based random access or two-step contention-free random access.

In the random access method in this embodiment of this application, the terminal may determine, by itself or by using the indication of the network device, the type of the random access that needs to be initiated, to better satisfy requirements of some data or services, thereby performing effective data transmission.

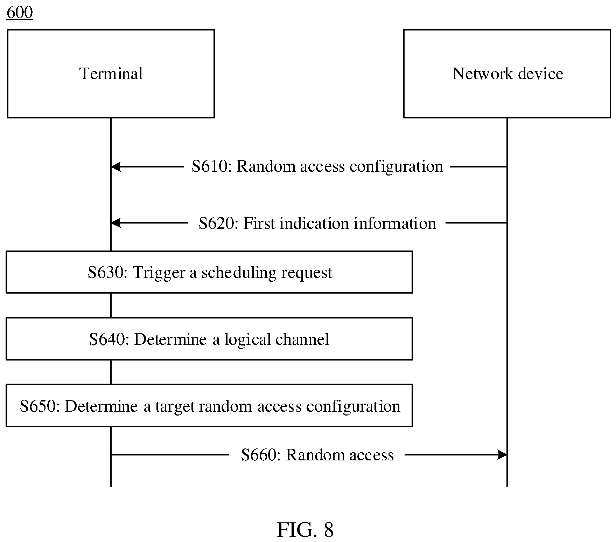

FIG. 8 is a schematic flowchart of a random access method 600 according to an embodiment of this application. As shown in FIG. 8, the method 600 includes the following steps.

S610: A network device sends a random access configuration to a terminal, and the terminal receives the random access configuration sent by the network device.

It should be understood that for the random access configuration, refer to the descriptions in the foregoing method 500. For brevity, details are not described herein again.

S620: The network device sends first indication information to the terminal, and the terminal receives the first indication information sent by the network device, where the first indication information is used to indicate an association relationship between a logical channel and a target random access configuration.

Optionally, the first indication information may be carried in the random access configuration in S610.

Optionally, that the network device sends first indication information to the terminal includes the following step:

The network device sends a logical channel configuration to the terminal, where the logical channel configuration includes the first indication information.

It should be understood that a sequence of sending the logical channel configuration and the random access configuration is not limited in this embodiment of this application.

S630: The terminal triggers a scheduling request.

It should be understood that for a process in which the terminal triggers the scheduling request, refer to the foregoing method 500. For brevity, details are not described herein again.

S640: The terminal determines a logical channel based on the triggered scheduling request.

It should be understood that for a process in which the terminal determines the logical channel based on the triggered scheduling request, refer to the foregoing method 500. For brevity, details are not described herein again.

S650: The terminal determines, based on the logical channel and the association relationship, a target random access configuration associated with the logical channel.

It should be understood that for a process in which the terminal determines the target random access configuration, refer to the foregoing method 500. For brevity, details are not described herein again.

S660: The terminal initiates random access to the network device by using the target random access configuration.

In the random access method in this embodiment of this application, the terminal may autonomously select a random access type based on the association relationship between the logical channel and the target random access configuration. This helps better satisfy requirements of some data or services, and also helps perform effective data transmission between the terminal and the network device.

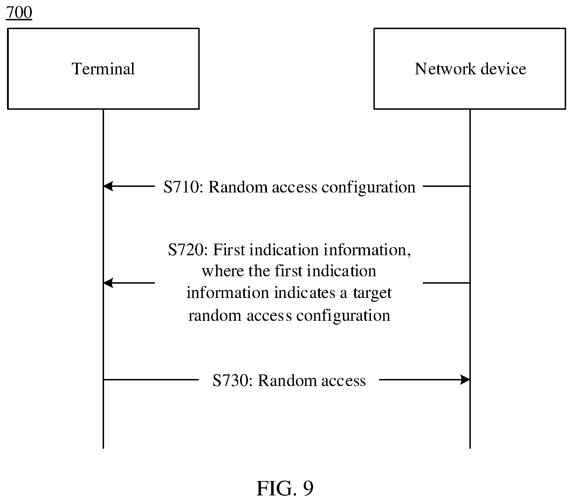

FIG. 9 is a schematic flowchart of a random access method 700 according to an embodiment of this application. As shown in FIG. 9, the method 700 includes the following steps.

S710: A network device sends a random access configuration to a terminal, and the terminal receives the random access configuration sent by the network device.

It should be understood that for the random access configuration, refer to the descriptions in the foregoing method 500. For brevity, details are not described herein again.

S720: The network device sends first indication information to the terminal, and the terminal receives the first indication information sent by the network device, where the first indication information is used to indicate a target random access configuration.

Optionally, the first indication information may be carried in the random access configuration in S710.

Optionally, that the network device sends first indication information to the terminal includes the following step:
The network device sends a logical channel configuration to the terminal, where the logical channel configuration includes the first indication information.

It should be understood that a sequence of sending the logical channel configuration and the random access configuration is not limited in this embodiment of this application.

Optionally, the first indication information may be sent by using a physical downlink control channel (physical downlink control channel, PDCCH) order (PDCCH order), and the PDCCH order may include an uplink resource and a preamble that are allocated by the network device. The preamble may be a contention-based preamble, or may be a contention-free preamble.

It can be learned that the network device may indicate, by using the PDCCH order, a type of random access to be initiated by the terminal, and then the terminal may initiate random access of the corresponding type.

The network device may indicate, by using a preamble sequence index (preamble index) in the PDCCH order, the terminal to initiate two-step contention-based random access (two-step CBRA) or four-step contention-based random access (four-step CBRA).

Optionally, when the preamble index is a first value, the terminal initiates two-step contention-based random access to the network device. When the preamble index is a second value, the terminal initiates four-step contention-based random access to the network device.

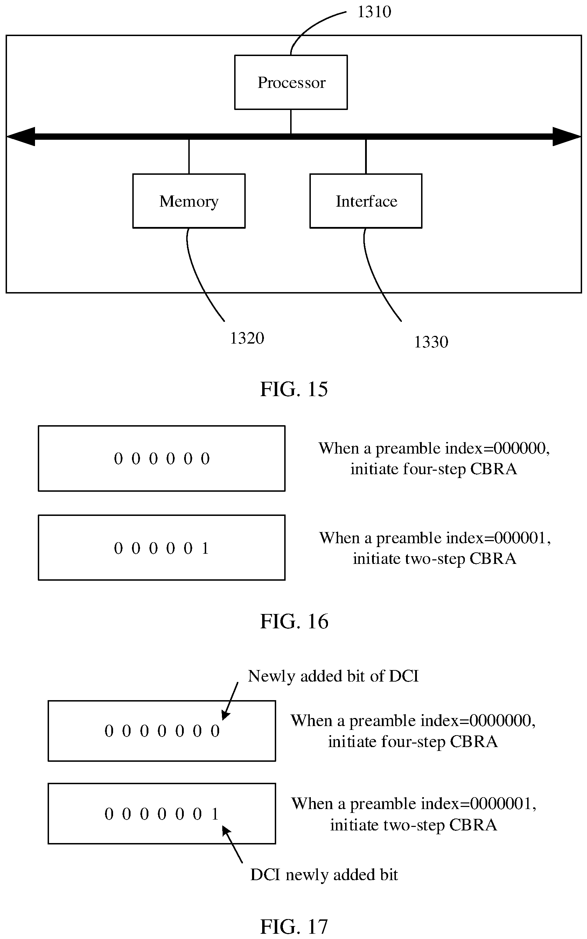

FIG. 16 is a schematic diagram of a preamble index. In this embodiment, the preamble index occupies six bits, and indicates random access types by using different values. As shown in FIG. 16, when the preamble index is 000000, the terminal initiates four-step contention-based random access to the network device. When the preamble index is 000001, the terminal initiates two-step contention-based random access to the network device. In this case, the first value of the preamble index is 000001, and the second value is 000000. Alternatively, the second value of the preamble index is 000001, and the first value is 000000. Alternatively, another value may be used for implementation. This is not limited in this embodiment.

Optionally, a quantity of bits occupied by the preamble index is increased, and a newly added bit is used to indicate the random access type. For example, the preamble index occupies seven bits. When the first six bits in the seven bits are all 0, the terminal determines to initiate contention-based random access. When a value of the 7^{th} bit in the seven bits is a first bit value, the terminal initiates two-step contention-based random access to the network device. When a value of the 7^{th} bit in the seven bits is a second bit value, the terminal initiates four-step contention-based random access to the network device.

FIG. 17 is a schematic diagram of another preamble index. As shown in FIG. 17, when the preamble index is 0000000, the terminal initiates four-step contention-based random access to the network device. When the preamble index is 0000001, the terminal initiates two-step contention-based random access to the network device. In this case, a first bit value of the 7^{th} bit is 1, and a second bit value is 0. Alternatively, a first bit of the 7^{th} bit is 0, and a second bit value is 1.

It should be understood that a specific value for initiating two-step contention-based random access or four-step contention-based random access is not specifically limited in this embodiment of this application, provided that the value is predefined by the terminal and the network device.

In an embodiment, the terminal may alternatively determine the RA type based on a capability of the terminal.

For example, if the preamble index in the PDCCH order that is sent by the network device and received by the terminal is 000000, the terminal may determine, based on the preamble index 000000, to initiate four-step contention-based random access. If the preamble index in the PDCCH order that is sent by the network device and received by the terminal is 000001, the terminal may determine, based on the preamble index 000001, to initiate two-step contention-based random access. If the terminal determines that the terminal has a capability of initiating two-step random access, the terminal initiates two-step contention-based random access when the preamble index is 000001. If the terminal determines that the terminal does not have a capability of initiating two-step random access, the terminal initiates four-step contention-based random access when the preamble index is 000001.

Alternatively, that the preamble index is 000000 is used to indicate the contention-based random access, and the terminal determines, based on the capability of the terminal, to initiate two-step random access or four-step random access. If the terminal determines that the terminal has a capability of initiating two-step random access, the terminal initiates two-step contention-based random access when the preamble index is 000000. If the terminal determines that the terminal does not have a capability of initiating two-step random access, the terminal initiates four-step contention-based random access when the preamble index is 000000. In this way, code points 000001 of the preamble index do not need to be used.

In this embodiment of this application, the terminal may be a terminal in a connected state. Before the PDCCH order triggers the terminal to initiate random access, the terminal has reported, to the network device, whether the terminal has the capability of initiating two-step random access, and the network device reports, to a core network, whether the terminal has the capability of initiating two-step random access. Therefore, when current random access is initiated, both the terminal and the network device know whether the terminal has the capability of initiating two-step random access.

In an embodiment, the network device may alternatively configure the random access type by using RRC dedicated signaling, and then trigger, by using a PDCCH order, the terminal to initiate corresponding random access. For example, the network device may determine, based on information such as a type of the terminal, a capability of the terminal, or a measurement report reported by the terminal, the type of random access that needs to be initiated by the terminal.

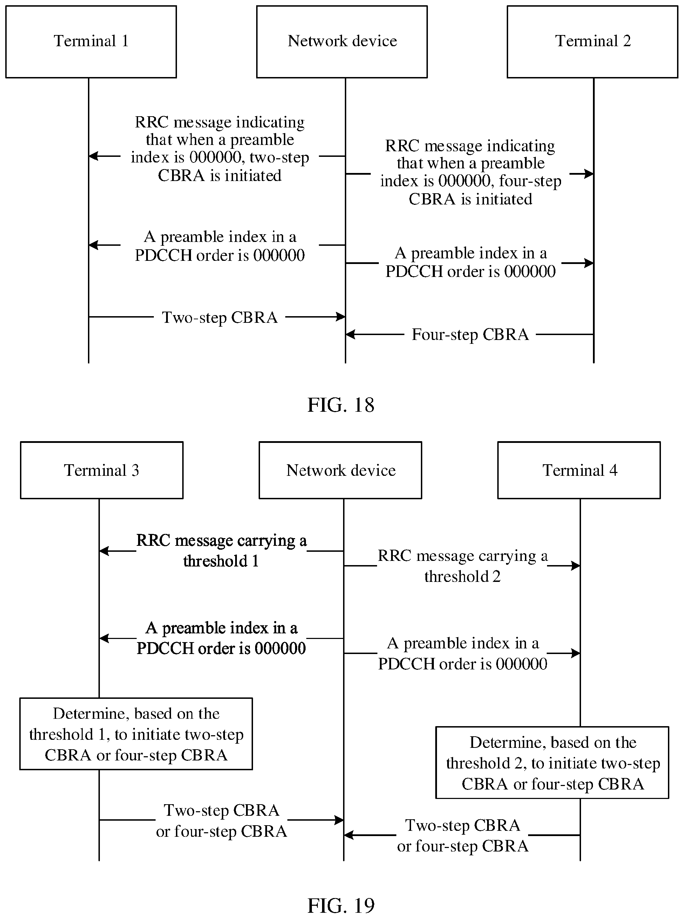

FIG. 18 is a schematic flowchart in which a network device indicates a random access type to a terminal by using an RRC message. As shown in FIG. 18, the network device may send a first RRC message to a terminal 1, where the first RRC message indicates the terminal 1 to initiate two-step contention-based random access when the terminal 1 receives a PDCCH order and a preamble index in the PDCCH order is 000000. The network device may send a second RRC message to a terminal 2, where the second RRC message indicates the terminal 2 to initiate four-step contention-based random access when the terminal 2 receives a PDCCH order and a preamble index in the PDCCH order is 000000. Afterwards, if the terminal 1 receives the PDCCH order, and the preamble index in the PDCCH order is 000000, the terminal 1 initiates two-step contention-based random access to the network device. If the terminal 2 receives the PDCCH order, and the preamble index in the PDCCH order is 000000, the terminal 2 initiates four-step contention-based random access to the network device.

In this embodiment of this application, the network device may indicate, to the terminal by using the RRC message, the random access type corresponding to the preamble index, and then the terminal initiates random access of the corresponding type when receiving the corresponding preamble index.

In an embodiment, the network device may alternatively configure a signal strength threshold or a signal quality threshold for the terminal by using RRC signaling. Thresholds of all terminals may be the same or may be different. The terminal may determine, based on the threshold, a type of random access to be initiated by the terminal.

The following provides descriptions by using an example in which the network device configures reference signal received power (reference signal received power, RSRP) threshold in an RRC message. FIG. 19 is another schematic flowchart in which a network device indicates a random access type to a terminal by using an RRC message. As shown in FIG. 19, the network device may send a third RRC message to a terminal 3, where the third RRC message indicates an RSRP threshold 1. The network device may send a fourth RRC message to a terminal 4, where the fourth RRC message indicates an RSRP threshold 2. If the terminal 3 receives a PDCCH order, and a preamble index in the PDCCH order is 000000, the terminal 3 may determine, based on the threshold 1, to initiate two-step contention-based random access or four-step contention-based random access. For example, if RSRP calculated by the terminal 3 is greater than or equal to the threshold 1, the terminal 3 initiates two-step contention-based random access. If RSRP calculated by the terminal 3 is less than the threshold 1, the terminal 3 initiates four-step contention-based random access. In this example, when the RSRP is equal to the threshold 1, the terminal initiates two-step contention-based random access. In another example, when the RSRP is equal to the threshold 1, the terminal initiates four-step contention-based random access.

If the terminal 4 receives a PDCCH order, and a preamble index in the PDCCH order is 000000, the terminal 4 may determine, based on the threshold 2, to initiate two-step contention-based random access or four-step contention-based random access. For example, if RSRP calculated by the terminal 4 is greater than or equal to the threshold 2, the terminal 4 initiates two-step contention-based random access. If RSRP calculated by the terminal 4 is less than the threshold 2, the terminal 4 initiates four-step contention-based random access. In this example, when the RSRP is equal to the threshold 2, the terminal initiates two-step contention-based random access. In another example, when the RSRP is equal to the threshold 2, the terminal initiates four-step contention-based random access.

It should be understood that the RSRP is used for description in FIG. 19. This embodiment of this application is not limited thereto. Alternatively, the network device may configure a reference signal received quality (reference signal received quality, RSRQ) threshold, a received signal strength indication (received signal strength indication, RSSI) threshold, or the like in the RRC message.

In an embodiment, the terminal may alternatively determine the random access type based on a search space of a received PDCCH order.

The network device may configure a plurality of PDCCH search space sets for the terminal, and different search space sets may correspond to different random access types. When receiving a PDCCH order from a specific search space, the terminal initiates random access corresponding to the specific search space. For example, if the terminal receives a PDCCH order from a search space 1, and a preamble index in the PDCCH order is 000000, the terminal initiates two-step contention-based random access. If the terminal receives a PDCCH order from a search space 2, and a preamble index in the PDCCH order is 000000, the terminal initiates four-step contention-based random access.

Optionally, after attempting to initiate two-step contention-based random access for a maximum quantity of times, the terminal may attempt to initiate four-step contention-based random access.

It should be understood that, in the foregoing embodiment, it is assumed that the network device triggers, by using the PDCCH order, the terminal to initiate contention-based random access. This embodiment of this application is not limited thereto. Alternatively, the network device may trigger, by using signaling at another layer, for example, an RRC message or a MAC CE, the terminal to initiate contention-based random access.

In this embodiment of this application, the terminal may determine, by using the indication of the network device or through determining performed by the terminal, the type of the random access to be initiated by the terminal.

In an existing protocol, if the preamble index indicated in the PDCCH order is equal to 000000, the terminal initiates contention-based random access. Otherwise, the terminal initiates contention-free random access. An existing mechanism supports only the four-step contention-free random access, and does not support the two-step contention-free random access. Therefore, when the PDCCH order indicates the terminal to initiate contention-free random access, whether the contention-free random access is the four-step random access or the two-step random access does not need to be determined.

After the two-step contention-free random access is introduced, because a transmission resource for the four-step contention-free random access (four-step CFRA) is different from a transmission resource for the two-step contention-free random access (two-step CFRA), the four-step contention-free random access and the two-step contention-free random access may be further distinguished. In this embodiment, "four-step CFRA" is used to represent an original contention-free random access process. Actually, the random access process does not really include four steps, and the expression of "four-step" continues to be used only to distinguish the four-step CFRA from the newly introduced "two-step CFRA".

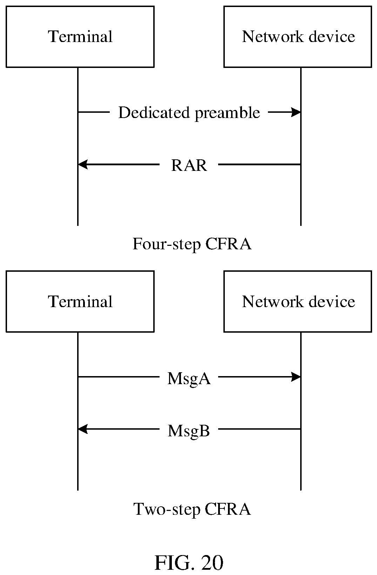

As shown in FIG. 20, in the "four-step CFRA", a terminal first sends a dedicated preamble (preamble) to a network device (for example, a DU). After receiving the dedicated preamble of the terminal, the network device returns a random access response (RAR) to the terminal. After sending the dedicated preamble, the terminal starts to monitor a message returned by the network device. After the terminal receives the RAR, it indicates that a random access process ends. The dedicated preamble has been sent by the network device to the terminal by using a system message before the random access process is initiated.

In the "two-step CFRA", a terminal first sends, to a network device, a message A (MsgA) including a dedicated preamble and an uplink shared channel payload (PUSCH payload). Then, the terminal starts to monitor and receive a message B (MsgB) that is returned by the network device and that includes uplink resource scheduling information. After the terminal receives the MsgB, it indicates that a random access process ends.

The term "dedicated" in the dedicated preamble means that the preamble is allocated by the network device to the terminal, and is dedicated to random access of the terminal. Therefore, different from a preamble in a contention-based random access process, the preamble does not conflict with a preamble used by another terminal.

Optionally, the terminal receives the first indication information from the network device, where the first indication information may be a physical random access channel mask index PRACH mask index. When a value of the PRACH mask index is a first value, the terminal initiates two-step contention-free random access. When a value of the PRACH mask index is a second value, the terminal initiates four-step contention-free random access.

It should be understood that the PRACH mask index may be carried in a PDCCH order.

In a conventional technology, if the network device may trigger, by using a PDCCH order or a dedicated RRC message, the terminal to initiate CFRA, the network device may further limit, by using a mask (mask) field, a physical random access channel time-frequency resource (PRACH occasion) to be used by the terminal to send the preamble. This is equivalent to obtaining a subset by dividing PRACH occasions, and the terminal can select a PRACH occasion from only the PRACH occasion subset, to initiate CFRA.

Optionally, the value of the PRACH mask index may alternatively indicate a physical random access channel PRACH resource, and the indicated resource may be all available PRACH resources, from which the terminal may select a resource to initiate random access.

The first value is further used to indicate a physical random access channel resource of the two-step contention-free random access.

The second value is further used to indicate a physical random access channel resource of the four-step contention-free random access.

It should be understood that, in this embodiment of this application, the physical random access channel resource may be a PRACH occasion.

Table 11 shows a correspondence between a PRACH mask index and a corresponding PRACH occasion.

**Table 11**

| PRACH mask index | Allowed PRACH occasion(s) of SSB |
|---|---|
| 0 | All |
| 1 | PRACH occasion index 1 |
| 2 | PRACH occasion index 2 |
| 3 | PRACH occasion index 3 |
| 4 | PRACH occasion index 4 |
| 5 | PRACH occasion index 5 |
| 6 | PRACH occasion index 6 |
| 7 | PRACH occasion index 7 |
| 8 | PRACH occasion index 8 |
| 9 | Every even PRACH occasion |
| 10 | Every odd PRACH occasion |
| 11 | The preamble index corresponds to all PRACH occasions of two-step CFRA |
| 12 | The preamble index corresponds to all PRACH occasions of four-step CFRA |
| 13 | Reserved |
| 14 | Reserved |
| 15 | Reserved |

For example, when the PRACH mask index is 11, the terminal may initiate two-step CFRA on all the PRACH occasions of the two-step CFRA. When the PRACH mask index is 12, the terminal may initiate four-step CFRA on all the PRACH occasions of the four-step CFRA.

In this embodiment of this application, two options (an option that the PRACH mask index is 11 and an option that the PRACH mask index is 12) are added to Table 1, and respectively indicate that "the preamble index corresponds to all PRACH occasions of two-step CFRA" and "the preamble index corresponds to all PRACH occasions of four-step CFRA". In this way, after the terminal receives the PDCCH order or the RRC message, if the preamble index is not equal to 000000 or 000001, the terminal may determine to initiate CFRA. Further, the terminal determines, by using the PRACH mask index, whether to initiate two-step CFRA or four-step CFRA. After a type of the CFRA is determined, the terminal finds the 1^{st} PRACH occasion that satisfies a condition, and starts to attempt random access.

In this embodiment of this application, the network device may divide preambles in each PRACH occasion. Some preambles may be used for the two-step CFRA, some preambles may be used for the four-step CFRA, some preambles may be used for the two-step CBRA, and some preambles may be used for the four-step CBRA. Division into the four types of preambles in different PRACH occasions may be the same or different. One PRACH occasion does not necessarily include the four types of preambles, and may include only one type, two types, or three types.

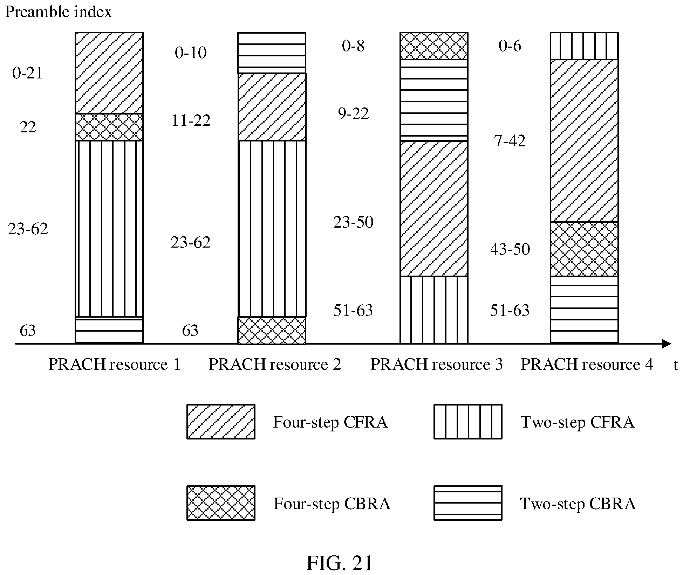

Specifically, for the CFRA, in each PRACH occasion, an area of a preamble index used for the two-step CFRA and an area of a preamble index used for the four-step CFRA may be different. As shown in FIG. 21, a preamble index=23 indicates a two-step CFRA resource in the 1^{st} PRACH occasion and the 2^{nd} PRACH occasion, and indicates a four-step CFRA resource in the 3^{rd} PRACH occasion and the 4^{th} PRACH occasion. In this case, the terminal may not be capable of determining, based on only the preamble index, whether to initiate two-step CFRA or four-step CFRA.

The following describes a process in which the terminal determines to initiate two-step CFRA or four-step CFRA.
(1) The network device may send a graph of a mapping relationship between a PRACH occasion index and each of four random access types to the terminal.
   It should be understood that, in this step, the network device may send the mapping relationship to the terminal in a broadcast manner.
(2) The network device sends a PDCCH order to the terminal, to trigger the terminal to initiated random access.
(3) The terminal determines whether a received preamble index indicates the terminal to initiate CBRA or CFRA. Specifically, that the preamble index is equal to 000000 indicates that the network device indicates the terminal to initiate CBRA, and that the preamble index is equal to another value indicates that the network device indicates the terminal to initiate CFRA. Alternatively, that the preamble index is equal to 000000 or 000001 indicates that the network device indicates the terminal to initiate CBRA, and that the preamble index is equal to another value indicates that the network device indicates the terminal to initiate CFRA.
(4) If the terminal determines that the PDCCH order indicates the terminal to initiate CFRA, the terminal needs to further determine whether to initiate two-step CFRA or four-step CFRA. For example, the terminal performs determining based on a preamble in an earliest PRACH Occasion that is after the PDCCH order is received.

The following uses an example in which the preamble index=23. If the preamble index=23 in the PDCCH order corresponds to the two-step CFRA in the PRACH occasion, the terminal initiates two-step CFRA.

If the preamble index=23 in the PDCCH order corresponds to the four-step CFRA in the PRACH occasion, the terminal initiates four-step CFRA.

If the preamble index=23 in the PDCCH order corresponds to neither the two-step CFRA nor the four-step CFRA in the PRACH occasion, the terminal searches for a next PRACH occasion for continuing to perform determining until a PRACH occasion in which the preamble index=23 corresponds to the two-step CFRA or the four-step CFRA is found.

Optionally, the terminal receives the PDCCH order from the network device. The PDCCH order includes the preamble index and a synchronization signal broadcast channel block index SSB index. There is a correspondence between the SSB index and a PRACH resource range. That the terminal initiates two-step contention-free random access or four-step contention-free random access to the network device includes the following steps:

The terminal determines one or more PRACH resources based on the SSB index.

The terminal selects a first PRACH resource from the one or more PRACH resources based on the preamble index, to initiate two-step contention-free random access or four-step contention-free random access to the network device.

If the PDCCH order further includes the SSB index, the terminal selects, in a PRACH occasion range indicated by the SSB index, an earliest PRACH occasion to perform the foregoing determining, to determine whether to initiate two-step CFRA or four-step CFRA.

For example, the terminal determines that PRACH occasions after the PDCCH order is received include an occasion 1, an occasion 2, an occasion 3, and an occasion 4. The terminal may determine, based on the SSB index, that random access may be initiated on the occasion 1 and the occasion 2. If the preamble index included in the PDCCH order is equal to 23, the terminal may first determine, on the occasion 1, that a random access type corresponding to the preamble index that is equal to 23 is the two-step CFRA, and the terminal may initiate two-step CFRA to the network device.

If the PDCCH order further includes the SSB index and the PRACH mask index, the terminal further selects, in a PRACH occasion range indicated by the SSB index, a PRACH occasion range indicated by the PRACH mask index, and finally selects, in the selected PRACH occasion range, an earliest PRACH occasion to perform the foregoing determining, to determine whether to initiate two-step CFRA or four-step CFRA.

Optionally, if the terminal selects the two-step CFRA or the four-step CFRA, the terminal may not change the random access type in a subsequent random access attempt.

Optionally, if the terminal fails to attempt two-step CFRA or four-step CFRA for the first time, the terminal continues to determine the 2^{nd} PRACH occasion based on the previous step, and then determines whether the preamble in the 2^{nd} PRACH occasion corresponds to a CFRA type selected by the terminal. If the preamble in the 2^{nd} PRACH occasion corresponds to the CFRA type selected by the terminal, the two-step CFRA or the four-step CFRA is re-attempted. If the preamble in the 2^{nd} PRACH occasion does not correspond to the CFRA type selected by the terminal, the 3^{rd} PRACH occasion is determined to continue the foregoing process. As shown in FIG. 21, if the preamble index notified in the PDCCH order is equal to 23, the terminal determines, in the 1^{st} PRACH occasion, that the preamble index=23 corresponds to a two-step CFRA resource, and initiates two-step CFRA. In the 2^{nd} PRACH occasion, the preamble index=23 corresponds to a two-step CFRA resource, and the terminal attempts the two-step CFRA again. In the 3^{rd} PRACH occasion, the preamble index=23 does not correspond to a two-step CFRA resource, and the terminal skips the 3^{rd} PRACH occasion.

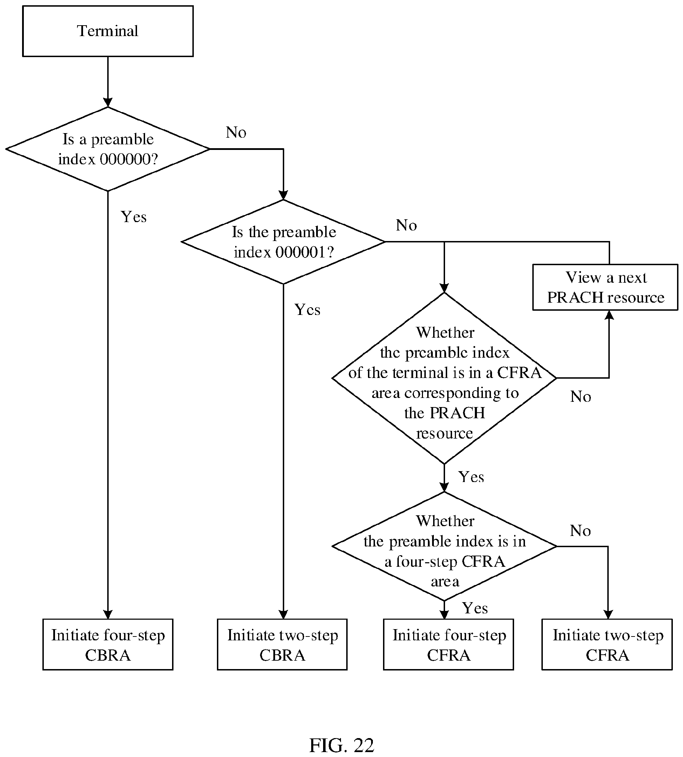

FIG. 22 is a schematic flowchart in which a terminal determines a random access type.

Optionally, the terminal may change an RA type each time the terminal attempts RA, and switch between the two-step CFRA and the four-step CFRA. On each PRACH occasion, the terminal selects the two-step CFRA or the four-step CFRA based on a preamble index in a PDCCH order. When continuing to attempt RA, the terminal selects the RA type again. For example, in the foregoing example in FIG. 21, if the preamble index=23 indicated by the PDCCH order corresponds to the two-step CFRA in the 1^{st} PRACH occasion and the 2^{nd} PRACH occasion, the terminal initiates two-step CFRA; if the preamble index=23 corresponds to the four-step CFRA in the 3^{rd} PRACH occasion and the 4^{th} PRACH occasion, the terminal initiates four-step CFRA. By using this method, the CFRA type selected by the terminal each time may be different.

Optionally, when the preamble index is neither equal to 000000 nor equal to 000001, if the terminal finds that the preamble index corresponds to an RA type of the CBRA in a PRACH occasion, the terminal may skip the PRACH occasion, and initiate RAon a next PRACH occasion, or may not skip the PRACH occasion, and initiate two-step CBRA or four-step CBRA by using the current PRACH occasion. Specifically, whether the terminal skips the PRACH occasion may be configured by a network device, or may be determined by the terminal.

If the terminal attempts two-step CFRA for a maximum quantity of times, the terminal may have the following choices.

One choice is that the terminal starts to attempt four-step CFRA, another choice is that the terminal starts to attempt two-step CBRA, and still another choice is that the terminal starts to attempt four-step CBRA. A choice to be made by the terminal may be determined in a protocol, or may be configured by using RRC signaling (dedicated or common). If the terminal attempts four-step CFRA, the terminal continues to use the preamble index originally indicated by the network device. For example, for the preamble index that is equal to 23 in the foregoing example, the terminal selects the PRACH occasion in which the preamble index corresponds to the four-step CFRA, for example, the 3^{rd} PRACH occasion and the 4^{th} PRACH occasion in FIG. 21. If the terminal attempts two-step CBRA or four-step CBRA, the terminal discards the preamble index originally indicated by the network device, and randomly selects a preamble, corresponding to the two-step CBRA or the four-step CBRA, from a next nearest PRACH occasion that includes a preamble corresponding to the two-step CBRA or the four-step CBRA, and continues to attempt random access.

It should be understood that the uplink resource that is included in the PDCCH order and that is allocated by the network device is a PUSCH resource, and is used to send user plane data or control plane data. The first indication information may further include a time-frequency resource that is of the two-step random access and that is allocated by the network device, or a time-frequency resource that is of the four-step random access and that is allocated by the network device. The time-frequency resource of the two-step random access or the time-frequency resource of the four-step random access may be associated with an SSB. The SSB includes a synchronization signal (for example, a primary synchronization signal and a secondary synchronization signal) and a physical broadcast channel. A purpose of the foregoing association is to enable the terminal to determine a receiving parameter, to receive a response message (that is, the MsgB) for the MsgA.

Optionally, if the time-frequency resource of the two-step random access and the time-frequency resource of the four-step random access are shared, but preambles of the two-step random access and preambles of the four-step random access are separated, the network device may select a preamble from the preambles of the two-step random access, and send an index of the preamble to the terminal. The terminal may determine, based on the index of the preamble, to perform two-step contention-based random access.

Optionally, when the first indication information indicates the terminal to initiate two-step random access, or when the first indication information indicates the terminal to initiate random access by using a configuration corresponding to the two-step random access, the method further includes the following step:

The network device sends second indication information to the terminal, where the second indication information is used to indicate the terminal to initiate two-step contention-based random access or two-step contention-free random access.

S730: The terminal initiates random access to the network device by using the target random access configuration.

For example, if the network device indicates to initiate two-step contention-based random access, the terminal initiates two-step contention-based random access. If the network device indicates to initiate two-step contention-free random access, the terminal initiates two-step contention-free random access. If the network device indicates to initiate four-step contention-based random access, the terminal initiates four-step contention-based random access.

In the random access method in this embodiment of this application, the network device may directly indicate, to the terminal, the type of the random access to be initiated. This helps better satisfy requirements of some data or services, and helps perform effective data transmission between the terminal and the network device.

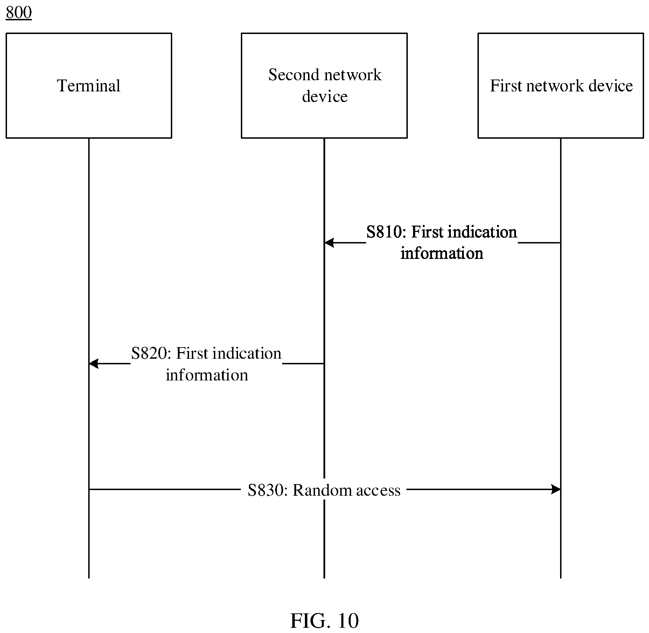

FIG. 10 is a schematic flowchart of a random access method 800 according to an embodiment of this application. The method 800 is mainly applied to a handover or an SCG change. As shown in FIG. 10, the method 800 includes the following steps.

S810: A first network device sends first indication information to a second network device, and the second network device receives the first indication information sent by the first network device, where the first indication information is used to indicate a type of random access to be initiated by a terminal to the first network device.

Optionally, the first network device is a target secondary network device, and the second network device is a source secondary network device.

For example, in an SCG change scenario, both the first network device and the second network device may be secondary network devices.

In LTE, if an SCG is added for the first time, the second network device may send a secondary network device addition request (secondary eNB addition request, SeNB addition request) message to the first network device, and the first network device sends a secondary network device addition request acknowledge (secondary eNB addition request acknowledge, SeNB addition request acknowledge) message to the second network device, where the secondary network device addition request acknowledge message may carry the first indication information.

In LTE, if an SCG is modified, the second network device may send a secondary network device modification request (secondary eNB modification request, SeNB modification request) message to the first network device, and the first network device sends a secondary network device modification request acknowledge (secondary eNB modification request acknowledge, SeNB modification request acknowledge) message to the second network device, where the secondary network device modification request acknowledge message may carry the first indication information.

In NR, if an SCG is added for the first time, the second network device may send a secondary network device addition request (secondary node addition request, S-node addition request) message to the first network device, and the first network device sends a secondary network device addition request acknowledge (secondary node addition request acknowledge, S-node addition request acknowledge) message to the second network device, where the secondary network device addition request acknowledge message may carry the first indication information.

In NR, if an SCG is modified, the second network device may send a secondary network device modification request (secondary node modification request, S-node modification request) message to the first network device, and the first network device sends a secondary network device modification request acknowledge (secondary node modification request acknowledge, S-node modification request acknowledge) message to the second network device, where the secondary network device modification request acknowledge message may carry the first indication information.

Optionally, the first network device is a target primary network device, and the second network device is a source primary network device.

For example, in a handover scenario, both the first network device and the second network device may be primary network devices. The second network device sends a handover request (handover request) message to the first network device, and the first network device returns a handover request acknowledge (handover request acknowledge) message, where the handover request acknowledge message may carry the first indication information.

In this embodiment of this application, in a handover scenario, the first indication information sent by the first network device to the second network device may be carried in the handover request acknowledge message. In the SCG change scenario, the first indication information sent by the first network device to the second network device may be carried in the secondary network device addition request acknowledge message or the secondary network device modification request acknowledge message.

Optionally, the handover request acknowledge message further includes an uplink resource and a preamble that are allocated by the first network device. The preamble may be a contention-based preamble, or may be a contention-free preamble.

Optionally, the method 800 further includes the following step:
The terminal receives a random access configuration sent by the second network device.

Optionally, the random access configuration is generated by the first network device, sent by the first network device to the second network device, and forwarded by the second network device to the terminal.

For example, in the SCG change scenario, if the SCG is added for the first time, the random access configuration may be carried in the secondary network device addition request acknowledge (which may be the SeNB addition request acknowledge in LTE, and may be the S-node addition request acknowledge in NR) message, and is sent by the first network device to the second network device.

For example, in the SCG change scenario, if the SCG is modified, the random access configuration may be carried in the secondary network device modification request acknowledge (which may be the SeNB modification request acknowledge in LTE, and may be the S-node modification request acknowledge in NR) message, and is sent by the first network device to the second network device.

For example, in the handover scenario, the random access configuration may be carried in the handover request acknowledge message, and is sent by the first network device to the second network device.

It should be understood that for the random access configuration, refer to the descriptions in the foregoing method 500. For brevity, details are not described herein again.

The first indication information may further include a time-frequency resource that is of two-step random access and that is allocated by the network device, or a time-frequency resource that is of four-step random access and that is allocated by the network device. The time-frequency resource of the two-step random access or the time-frequency resource of the four-step random access may be associated with an SSB. The SSB includes a synchronization signal (for example, a primary synchronization signal and a secondary synchronization signal) and a physical broadcast channel. A purpose of the foregoing association is to enable the terminal to determine a receiving parameter, to receive a response message (that is, a MsgB) for a MsgA.

Optionally, if the time-frequency resource of the two-step random access and the time-frequency resource of the four-step random access are shared, but preambles of the two-step random access and preambles of the four-step random access are separated, the network device may select a preamble from the preambles of the two-step random access, and send an index of the preamble to the terminal. The terminal may determine, based on the index of the preamble, to perform two-step contention-based random access.

Optionally, when the first indication information indicates the terminal to initiate two-step random access, or when the first indication information indicates the terminal to initiate random access by using a configuration corresponding to the two-step random access, the method further includes the following step:
The first network device sends second indication information to the second network device, where the second indication information is used to indicate the terminal to initiate two-step contention-based random access or two-step contention-free random access.

Optionally, the second indication information may be carried in the secondary network device addition request acknowledge (which may be the SeNB addition request acknowledge in LTE, and may be the S-node addition request acknowledge in NR) message, the secondary network device modification request acknowledge (which may be the SeNB modification request acknowledge in LTE, and may be the S-node modification request acknowledge in NR) message, or the handover request acknowledge message.

S820: The second network device sends the first indication information to the terminal.

For example, in the handover scenario, the first indication information may be carried in an RRC connection reconfiguration (RRC connection reconfiguration) message or an RRC reconfiguration (RRC reconfiguration) message.

It should be understood that, in the handover scenario in LTE, the first indication information sent by the second network device to the terminal may be carried in the RRC connection reconfiguration message. For example, the first indication information may be carried in mobility control information in the RRC connection reconfiguration message.

It should be further understood that, in the handover scenario in NR, the first indication information sent by the second network device to the terminal may be carried in the RRC reconfiguration message. For example, the first indication information may be carried in a synchronization reconfiguration message in the RRC reconfiguration message.

For example, in the SCG change scenario in LTE (for example, the SCG is added for the first time or the SCG is modified), the first indication information sent by the second network device to the terminal may be carried in the RRC connection reconfiguration message. For example, the first indication information may be carried in mobility control information in the RRC connection reconfiguration message.

For example, in the SCG change scenario in NR (for example, the SCG is added for the first time or the SCG is modified), the first indication information sent by the second network device to the terminal may be carried in the RRC reconfiguration message. For example, the first indication information may be carried in a synchronization reconfiguration message in the RRC reconfiguration message. It should be understood that the random access configuration may be carried in the RRC connection reconfiguration message or the RRC reconfiguration message, and sent by the second network device to the terminal.

It should be further understood that the second indication information may be carried in the RRC connection reconfiguration message or the RRC reconfiguration message, and sent by the second network device to the terminal.

S830: The terminal initiates random access to the first network device based on the first indication information.

For example, after receiving the first indication information, the terminal may determine a random access type based on the first indication information, use a corresponding random access configuration, and initiate a corresponding random access process (the two-step random access or the four-step random access). If the first network device indicates to initiate two-step contention-based random access, the terminal initiates two-step contention-based random access. If the first network device indicates to initiate two-step contention-free random access, the terminal initiates two-step contention-free random access. If the first network device indicates to initiate four-step contention-based random access, the terminal initiates four-step contention-based random access.

In the random access method in this embodiment of this application, the network device may directly indicate, to the terminal, the type of the random access to be initiated. This helps better satisfy requirements of some data or services, and helps perform effective data transmission between the terminal and the network device.

The random access methods provided in the embodiments of this application are described in detail with reference to FIG. 5 to FIG. 10. The following describes in detail random access apparatuses provided in the embodiments of this application with reference to the accompanying drawings.

An embodiment of this application further provides an apparatus configured to implement any one of the foregoing methods. For example, an apparatus is provided, including units (or means) configured to implement the steps performed by the terminal in any one of the foregoing methods. For another example, another apparatus is further provided, including units (or means) configured to implement the steps performed by the network device in any one of the foregoing methods.

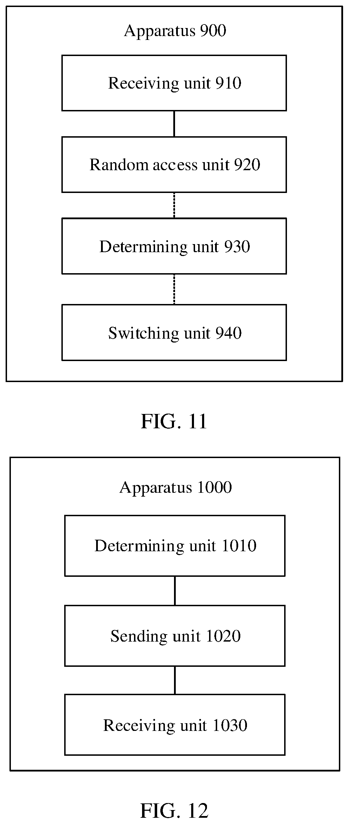

FIG. 11 is a schematic block diagram of a random access apparatus 900 according to an embodiment of this application. As shown in FIG. 11, the random access apparatus 900 may include a receiving unit 910 and a random access unit 920.

In a possible design, the apparatus 900 may be the terminal in the foregoing method 300 to the method 800, or may be a chip configured in the terminal.

Specifically, the receiving unit 910 is configured to receive a random access configuration from a network device.

The receiving unit 910 is further configured to receive first indication information from the network device, where the first indication information is used to determine a target random access configuration in the random access configuration.

The random access unit 920 is configured to initiate random access to the network device based on the first indication information by using the target random access configuration.

Optionally, the first indication information indicates the target random access configuration.

Optionally, the first indication information indicates an association relationship between a logical channel and the target random access configuration, and the random access unit 920 is specifically configured to:
determine the logical channel of to-be-transmitted data; and
initiate random access to the network device based on the association relationship by using the target random access configuration associated with the logical channel.

Optionally, that the random access unit 920 determines the logical channel of to-be-transmitted data includes:
the random access unit 920 determines the logical channel based on a triggered SR.

Optionally, the first indication information indicates an association relationship between a QoS flow and the target random access configuration, and the random access unit 920 is specifically configured to:
determine the QoS flow of to-be-transmitted data; and
initiate random access to the network device based on the association relationship by using the target random access configuration associated with the QoS flow.

Optionally, the target random access configuration includes a two-step random access configuration and a four-step random access configuration, and the random access unit 920 is specifically configured to:
initiate two-step random access to the network device.

Optionally, the random access unit 920 is specifically configured to:
initiate two-step random access to the network device during running of a timer.

Optionally, the apparatus 900 further includes:
a determining unit 930, configured to determine that there is no random access resource of the target random access configuration in a first bandwidth part BWP; and
a switching unit 940, configured to switch from the first BWP to a second BWP, where there is the random access resource of the target random access configuration in the second BWP.

The random access unit 920 is specifically configured to:
initiate random access to the network device in the second BWP by using the target random access configuration.

Optionally, the second BWP is an initial BWP or a default BWP.

Optionally, the random access configuration includes the first indication information.

Optionally, the receiving unit 910 is specifically configured to:
receive a logical channel configuration from the network device, where the logical channel configuration includes the first indication information; or
receive an RB configuration from the network device, where the RB configuration includes the first indication information.

Optionally, the receiving unit 910 is further configured to:
receive second indication information from the network device, where the second indication information is used to indicate to initiate two-step contention-based random access or two-step contention-free random access.

In an embodiment, the receiving unit 910 is further configured to receive first indication information from a network device, where the first indication information is used to determine a random access type.

The random access unit 920 is further configured to initiate, to the network device based on the first indication information, random access of the type indicated by using the first indication information.

Optionally, the first indication information is a physical random access channel mask index PRACH mask index, and the random access unit 920 is specifically configured to:
when a value of the PRACH mask index is a first value, initiate two-step contention-free random access; or
when a value of the PRACH mask index is a second value, initiate four-step contention-free random access.

Optionally, the first value is further used to indicate a physical random access channel PRACH resource of the two-step contention-free random access.

The second value is further used to indicate a physical random access channel resource of the four-step contention-free random access.

Optionally, the first indication information is a preamble index, and the random access unit 920 is specifically configured to:
when a value of the preamble index is a first value, initiate two-step contention-based random access to the network device; or
when a value of the preamble index is a second value, initiate four-step contention-based random access to the network device.

Optionally, the preamble index occupies seven bits, and when the first six bits in the seven bits are all 0 and a value of the 7^{th} bit in the seven bits is a first bit value, the preamble index is used to indicate to initiate two-step contention-based random access, where when the value of the 7^{th} bit is the first bit value, the value of the preamble index is the first value.

Alternatively, when the first six bits in the seven bits are all 0 and a value of the 7^{th} bit in the seven bits is a second bit value, the preamble index is used to indicate to initiate four-step contention-based random access, where when the value of the 7^{th} bit is the second bit value, the value of the preamble index is the second value.

Optionally, when the value of the preamble index is a value other than the first value and the second value, the random access unit 920 is specifically configured to:
initiate two-step contention-free random access or four-step contention-free random access to the network device based on a capability of a terminal, a channel status, a position of a physical downlink control channel PDCCH resource, or a mapping relationship between the preamble index and a PRACH resource.

Optionally, the receiving unit 910 is specifically configured to receive a physical downlink control channel PDCCH order from the network device, where the PDCCH order includes the preamble index and a synchronization signal broadcast channel block index SSB index, and there is a correspondence between the SSB index and a PRACH resource range, and the random access unit 920 is specifically configured to:
determine one or more PRACH resources based on the SSB index; and
select a first PRACH resource from the one or more PRACH resources based on the preamble index, to initiate two-step contention-free random access or four-step contention-free random access to the network device.

It should be understood that the apparatus 900 may correspond to the terminal in the random access method 500 to the method 800 according to the embodiments of this application, and the apparatus 900 may include units configured to perform the method performed by the terminal in the method 500 to the method 800. In addition, the units in the apparatus 900 and the foregoing other operations and/or functions are respectively used to implement corresponding processes in the method 500 to the method 800. For a specific process of performing the foregoing corresponding steps by the units, refer to the foregoing descriptions with reference to the method embodiments in FIG. 7 to FIG. 10. For brevity, details are not described herein again.

FIG. 12 is a schematic block diagram of a random access apparatus 1000 according to an embodiment of this application. As shown in FIG. 12, the random access apparatus 1000 may include a determining unit 1010, a sending unit 1020, and a receiving unit 1030.

In a possible design, the random access apparatus may be the network device in the foregoing method 300 to the method 800, or may be a chip configured in the network device.

Specifically, the determining unit 1010 is configured to determine a random access configuration.

The sending unit 1020 is configured to send the random access configuration to a terminal.

The sending unit 1020 is further configured to send first indication information to the terminal, where the first indication information is used to determine a target random access configuration in the random access configuration.

The receiving unit 1030 is configured to receive random access initiated by the terminal by using the target random access configuration.

Optionally, the first indication information indicates the target random access configuration.

Optionally, the first indication information indicates an association relationship between a logical channel and the target random access configuration.

Optionally, the first indication information indicates an association relationship between a QoS flow and the target random access configuration.

Optionally, the target random access configuration includes a two-step random access configuration and a four-step random access configuration, and the receiving unit 1030 is specifically configured to:
receive two-step random access initiated by the terminal.

Optionally, the random access configuration includes the first indication information.

Optionally, the sending unit 1020 is specifically configured to:
send a logical channel configuration to the terminal, where the logical channel configuration includes the first indication information; or
send an RB configuration to the terminal, where the RB configuration includes the first indication information.

Optionally, the sending unit 1020 is specifically configured to:
send an RRC connection reconfiguration message to the terminal, where the RRC connection reconfiguration message includes the first indication information; or
send an RRC reconfiguration message to the terminal, where the RRC reconfiguration message includes the first indication information.

It should be understood that the apparatus 1000 may correspond to the network device in the random access method 500 to the method 800 according to the embodiments of this application, and the apparatus 1000 may include units configured to perform the method performed by the network device in the method 500 to the method 800. In addition, the units in the apparatus 1000 and the foregoing other operations and/or functions are respectively used to implement corresponding processes in the method 500 to the method 800. For a specific process of performing the foregoing corresponding steps by the units, refer to the foregoing descriptions with reference to the method embodiments in FIG. 7 to FIG. 10. For brevity, details are not described herein again.

It should be understood that division of the foregoing apparatus into units is merely division into logical functions. During actual implementation, all or some of the units may be integrated into one physical entity or may be physically separated. In addition, all the units in the apparatus may be implemented in a form of software invoked by a processing element, or may be implemented in a form of hardware; or some units may be implemented in a form of software invoked by a processing element, or may be implemented in a form of hardware. For example, each unit may be a separately disposed processing element, or may be integrated into a chip of the apparatus for implementation. Alternatively, each unit may be stored in a memory in a form of a program to be invoked by a processing element of the apparatus to perform a function of the unit. In addition, all or some of the units may be integrated together, or may be implemented independently. The processing element herein may also be referred to as a processor, and may be an integrated circuit having a signal processing capability. In an implementation process, the steps in the foregoing methods or the foregoing units may be implemented by using a hardware integrated logic circuit in the processing element, or may be implemented in a form of software invoked by the processing element.

In an example, a unit in any one of the foregoing apparatuses may be one or more integrated circuits configured to implement the foregoing methods, for example, one or more application-specific integrated circuits (applicationspecific integrated circuit, ASIC), one or more digital signal processor (digital signal processor, DSP), one or more field programmable gate arrays (field programmable gate array, FPGA), or a combination of at least two of the integrated circuit forms. For another example, when the unit in the apparatus is implemented by scheduling a program by a processing element, the processing element may be a general purpose processor, for example, a central processing unit (central processing unit, CPU) or another processor that can invoke the program. For another example, the units may be integrated and implemented in a form of a system-on-a-chip (system-on-a-chip, SOC).

The foregoing receiving unit is an interface circuit of the apparatus, and is configured to receive a signal from another apparatus. For example, when the apparatus is implemented in a form of a chip, the receiving unit is an interface circuit that is of the chip and that is configured to receive a signal from another chip or apparatus. The foregoing sending unit is an interface circuit of the apparatus, and is configured to send a signal to another apparatus. For example, when the apparatus is implemented in the form of the chip, the sending unit is an interface circuit that is of the chip and that is configured to send a signal to another chip or apparatus.

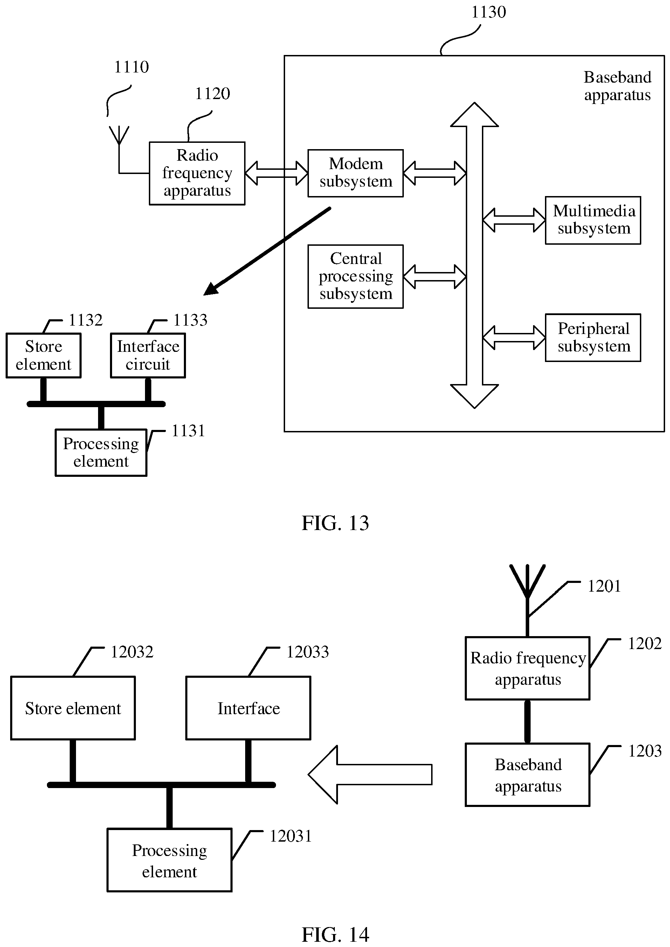

FIG. 13 is a schematic structural diagram of a terminal according to an embodiment of this application. The terminal may be the terminal in the foregoing embodiments, and is configured to implement an operation of the terminal in the foregoing embodiments. As shown in FIG. 13, the terminal includes an antenna 1110, a radio frequency part 1120, and a signal processing part 1130. The antenna 1110 is connected to the radio frequency part 1120. In a downlink direction, the radio frequency part 1120 receives, through the antenna 1110, information sent by a network device, and sends, to the signal processing part 1130 for processing, the information sent by the network device. In an uplink direction, the signal processing part 1130 processes information of the terminal, and sends the information to the radio frequency part 1120. The radio frequency part 1120 processes the information of the terminal, and then sends the processed information to the network device through the antenna 1110.

The signal processing part 1130 may include a modem subsystem, configured to process data at each communication protocol layer. The signal processing part 1130 may further include a central processing subsystem, configured to process an operating system and an application layer of the terminal. In addition, the signal processing part 1130 may further include another subsystem, for example, a multimedia subsystem or a peripheral subsystem. The multimedia subsystem is configured to control a camera, a screen display, or the like of the terminal. The peripheral subsystem is configured to implement a connection to another device. The modem subsystem may be a separately disposed chip. Optionally, the foregoing apparatus used for the terminal may be located in the modem subsystem.

The modem subsystem may include one or more processing elements 1131, for example, include one main control CPU and another integrated circuit. In addition, the modem subsystem may further include a storage element 1132 and an interface circuit 1133. The storage element 1132 is configured to store data and a program. However, a program used to perform the methods performed by the terminal in the foregoing methods may not be stored in the storage element 1132, but is stored in a memory outside the modem subsystem, and is loaded by the modem subsystem to use. The interface circuit 1133 is configured to communicate with another subsystem. The foregoing apparatus used for the terminal may be located in the modem subsystem. The modem subsystem may be implemented by using a chip. The chip includes at least one processing element and interface circuit. The processing element is configured to perform the steps in any one of the methods performed by the terminal. The interface circuit is configured to communicate with another apparatus. In an implementation, units of the terminal that implement the steps in the foregoing methods may be implemented by a program scheduled by a processing element. For example, the apparatus used for the terminal includes a processing element and a storage element. The processing element invokes a program stored in the storage element, to perform the methods performed by the terminal in the foregoing method embodiments. The storage element may be a storage element located on a same chip as the processing element, namely, an on-chip storage element.

In another implementation, the program used to perform the methods performed by the terminal in the foregoing methods may be in a storage element located on a different chip from the processing element, namely, an off-chip storage element. In this case, the processing element invokes or loads the program from the off-chip storage element to the on-chip storage element, to invoke and perform the methods performed by the terminal in the foregoing method embodiments.

In still another implementation, units of the terminal that implement the steps in the foregoing methods may be configured as one or more processing elements. The processing elements are disposed on the modem subsystem. The processing element herein may be an integrated circuit, for example, one or more ASICs, one or more DSPs, one or more FPGAs, or a combination of these types of integrated circuits. The integrated circuits may be integrated together to form a chip.

Units of the terminal that implement the steps in the foregoing methods may be integrated together, and implemented in a form of an SOC. The SOC chip is configured to implement the foregoing methods. At least one processing element and storage element may be integrated into the chip, and the processing element invokes a program stored in the storage element to implement the foregoing methods performed by the terminal. Alternatively, at least one integrated circuit may be integrated into the chip, to implement the foregoing methods performed by the terminal. Alternatively, with reference to the foregoing implementations, functions of some units may be implemented by the program invoked by the processing element, and functions of some units may be implemented by the integrated circuit.

It can be learned that the foregoing apparatus used for the terminal may include at least one processing element and interface circuit. The at least one processing element is configured to perform any one of the methods performed by the terminal that are provided in the foregoing method embodiments. The processing element may perform some or all steps performed by the terminal, in a first manner, to be specific, by invoking the program stored in the storage element; or may perform some or all steps performed by the terminal, in a second manner, to be specific, by using a hardware integrated logic circuit in the processor element in combination with instructions; or may certainly perform, by combining the first manner and the second manner, some or all steps performed by the terminal.

As described above, the processing element herein may be a general purpose processor, for example, a CPU, or may be one or more integrated circuits configured to implement the foregoing methods, for example, one or more ASICs, one or more microprocessors DSPs, or one or more FPGAs, or a combination of at least two of the integrated circuit forms.

The storage element may be a memory, or may be a general name of a plurality of storage elements.

FIG. 14 is a schematic structural diagram of a network device according to an embodiment of this application. The network device may be the network device in the foregoing embodiments, and is configured to implement an operation of the network device in the foregoing embodiments. As shown in FIG. 14, the network device includes an antenna 1201, a radio frequency apparatus 1202, and a baseband apparatus 1203. The antenna 1201 is connected to the radio frequency apparatus 1202. In an uplink direction, the radio frequency apparatus 1202 receives, through the antenna 1201, information sent by a terminal, and sends, to the baseband apparatus 1203 for processing, the information sent by the terminal. In a downlink direction, the baseband apparatus 1203 processes information of the terminal, and sends the information to the radio frequency apparatus 1202. The radio frequency apparatus 1202 processes the information of the terminal, and then sends the processed information to the terminal through the antenna 1201.

The baseband apparatus 1203 may include one or more processing elements 12031, for example, include a main control CPU and another integrated circuit. In addition, the baseband apparatus 1203 may further include a storage element 12032 and an interface 12033. The storage element 12032 is configured to store a program and data. The interface 12033 is configured to exchange information with the radio frequency apparatus 1202, and the interface is, for example, a common public radio interface (common public radio interface, CPRI). The foregoing apparatus used for the network device may be located in the baseband apparatus 1203. For example, the foregoing apparatus used for the network device may be a chip in the baseband apparatus 1203. The chip includes at least one processing element and an interface circuit. The processing element is configured to perform the steps of any method performed by the network device. The interface circuit is configured to communicate with another apparatus. In an implementation, units of the network device that implement the steps in the foregoing methods may be implemented by a program scheduled by a processing element. For example, the apparatus used for the network device includes a processing element and a storage element. The processing element invokes a program stored in the storage element, to perform the methods performed by the network device in the foregoing method embodiments. The storage element may be a storage element located on a same chip as the processing element, namely, an on-chip storage element, or may be a storage element located on a different chip from the processing element, namely, an off-chip storage element.

In another implementation, units of the network device that implement the steps in the foregoing methods may be configured as one or more processing elements. The processing elements are disposed on the baseband apparatus. The processing element herein may be an integrated circuit, for example, one or more ASICs, one or more DSPs, one or more FPGAs, or a combination of these types of integrated circuits. The integrated circuits may be integrated together to form a chip.

Units of the network device that implement the steps in the foregoing methods may be integrated together, and implemented in a form of an SOC. For example, the baseband apparatus includes the SOC chip, configured to implement the foregoing methods. At least one processing element and storage element may be integrated into the chip, and the processing element invokes a program stored in the storage element to implement the foregoing methods performed by the network device. Alternatively, at least one integrated circuit may be integrated into the chip, to implement the foregoing methods performed by the network device. Alternatively, with reference to the foregoing implementations, functions of some units may be implemented by the program invoked by the processing element, and functions of some units may be implemented by the integrated circuit.

It can be learned that the foregoing apparatus used for the network device may include at least one processing element and interface circuit. The at least one processing element is configured to perform any one of the methods performed by the network device that are provided in the foregoing method embodiments. The processing element may perform some or all steps performed by the network device, in a first manner, to be specific, by invoking the program stored in the storage element; or may perform some or all steps performed by the network device, in a second manner, to be specific, by using a hardware integrated logic circuit in the processor element in combination with instructions; or may certainly perform, by combining the first manner and the second manner, some or all steps performed by the network device.

As described above, the processing element herein may be a general purpose processor, for example, a CPU, or may be one or more integrated circuits configured to implement the foregoing methods, for example, one or more ASICs, one or more microprocessors DSPs, or one or more FPGAs, or a combination of at least two of the integrated circuit forms.

The storage element may be a memory, or may be a general name of a plurality of storage elements.

FIG. 15 is another schematic structural diagram of a network device according to an embodiment of this application. The network device may be the network device in the foregoing embodiments, and is configured to implement an operation of the network device in the foregoing embodiments.

As shown in FIG. 15, the network device includes a processor 1310, a memory 1320, and an interface 1330. The processor 1310, the memory 1320, and the interface 1330 are signal-connected.

The foregoing random access apparatus 1000 may be located in the network device, and a function of each unit may be implemented by the processor 1310 by invoking a program stored in the memory 1320. That is, the foregoing random access apparatus 1000 includes a memory and a processor. The memory is configured to store a program, and the program is invoked by the processor to perform the methods in the foregoing method embodiments. The processor herein may be an integrated circuit having a signal processing capability, for example, a CPU. Alternatively, functions of the foregoing units may be implemented by one or more integrated circuits configured to implement the foregoing methods, for example, one or more ASICs, one or more microprocessors DSPs, one or more FPGAs, or a combination of at least two of the integrated circuits. Alternatively, the foregoing implementations may be combined.

According to the methods provided in the embodiments of this application, this application further provides a computer program product. The computer program product includes computer program code. When the computer program code is run on a computer, the computer is enabled to perform the methods in the foregoing embodiments.

Based on the methods provided in the embodiments of this application, this application further provides a computer-readable medium. The computer-readable medium stores program code, and when the program code is run on a computer, the computer is enabled to perform the methods in the foregoing embodiments.

The terminal and the network device in the foregoing apparatus embodiments may completely correspond to the terminal or the network device in the method embodiments, and a corresponding module or unit performs a corresponding step. For example, when the apparatus is implemented in a chip manner, the receiving unit may be an interface circuit that is of the chip and that is configured to receive a signal from another chip or apparatus. The foregoing sending unit is an interface circuit of the apparatus, and is configured to send a signal to another apparatus. For example, when the apparatus is implemented by a chip, the sending unit is an interface circuit that is of the chip and that is configured to send a signal to another chip or apparatus.

An embodiment of this application further provides a communications system. The communications system includes the foregoing terminal and/or the foregoing network device.

In the embodiments of this application, it should be noted that the foregoing method embodiments in the embodiments of this application may be applied to a processor, or may be implemented by a processor. The processor may be an integrated circuit chip and has a signal processing capability. In an implementation process, the steps in the foregoing method embodiments may be implemented by using a hardware integrated logic circuit in the processor, or by using instructions in a form of software. The foregoing processor may be a general purpose processor, a DSP, an ASIC, an FPGA or another programmable logic device, a discrete gate or transistor logic device, or a discrete hardware component. The processor may implement or perform the methods, steps, and logical block diagrams that are disclosed in the embodiments of this application. The general purpose processor may be a microprocessor, or the processor may be any conventional processor or the like. The steps of the methods disclosed with reference to the embodiments of this application may be directly performed and completed by a hardware decoding processor, or may be performed and completed by a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in the embodiments of this application may be a volatile memory or a non-volatile memory, or may include a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external buffer. Through examples but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memories in the systems and methods described in this specification include but are not limited to these memories and any memory of another suitable type.

The terms "uplink" and "downlink" in this application are used to describe a data/information transmission direction in a specific scenario. For example, an "uplink" direction is usually a direction in which data/information is transmitted from a terminal to a network side, or a direction in which data/information is transmitted from a distributed unit to a centralized unit, and a "downlink" direction is usually a direction in which data/information is transmitted from a network side to a terminal, or a direction in which data/information is transmitted from a centralized unit to a distributed unit. It may be understood that the "uplink" and the "downlink" are only used to describe transmission directions of data/information, and neither a specific start device nor a specific end device of data/information transmission is limited.

Names may be assigned to various objects that may appear in this application, for example, various messages/information/devices/network elements/systems/apparatuses/actions/operations/procedures/concepts. It may be understood that these specific names do not constitute a limitation on the related objects, and the assigned names may change with a factor such as a scenario, a context, or a use habit. Technical meanings of technical terms in this application should be understood and determined mainly based on functions and technical effects that are of the technical terms and that are reflected/performed in the technical solutions.

In the embodiments of this application, architectures of the CU and the DU are not limited to the 5G NR gNB, and may be further applied to a scenario in which an LTE base station is divided into the CU and the DU. The CU may be further divided into two parts: a CP and a UP. Optionally, in the LTE base station, the protocol layer does not include an SDAP layer.

A network architecture and a service scenario described in the embodiments of this application are intended to help readers clearly understand the technical solutions in the embodiments of this application, and do not constitute a limitation on the technical solutions provided in the embodiments of this application. A person of ordinary skill in the art may know that, with the evolution of the network architecture and the emergence of a new service scenario, the technical solutions provided in the embodiments of this application are also applicable to a similar technical problem.

All or some of the foregoing embodiments may be implemented by using software, hardware, firmware, or any combination thereof. When software is used to implement the embodiments, the embodiments may be implemented completely or partially in a form of a computer program product. The computer program product may include one or more computer instructions. When the computer program instructions are loaded and executed on the computer, all or some of the procedures or the functions according to the embodiments of this application are generated. The computer may be a general purpose computer, a dedicated computer, a computer network, or other programmable apparatuses. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (such as a coaxial cable, an optical fiber, or a digital subscriber line (DSL)) or wireless (such as infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic disk), an optical medium (for example, a DVD), a semiconductor medium (for example, a solid-state drive (solid-state drive, SSD)), or the like.

A person of ordinary skill in the art may be aware that, in combination with examples described in the embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

Units described as separate parts may or may not be physically separate, and parts displayed as units may or may not be physical units, in other words, may be located in one position, or may be distributed on a plurality of network units. Some or all of the units may be selected according to an actual requirement to achieve objectives of the solutions of the embodiments.

In addition, functional units in the embodiments of this application may be integrated into one processing unit, or each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A random access method, comprising:
receiving a random access configuration from a network device;
receiving first indication information from the network device, wherein the first indication information is used to determine a target random access configuration in the random access configuration; and
initiating random access to the network device based on the first indication information by using the target random access configuration.

2. The method according to claim 1, wherein the first indication information indicates the target random access configuration.

3. The method according to claim 1, wherein the first indication information indicates an association relationship between a logical channel and the target random access configuration, and the initiating random access to the network device based on the first indication information by using the target random access configuration comprises:
determining the logical channel of to-be-transmitted data; and
initiating random access to the network device based on the association relationship by using the target random access configuration associated with the logical channel.

4. The method according to claim 3, wherein the determining the logical channel of to-be-transmitted data comprises:
determining the logical channel based on a triggered scheduling request SR.

5. The method according to claim 1, wherein the first indication information indicates an association relationship between a quality of service QoS flow and the target random access configuration, and the initiating random access to the network device based on the first indication information by using the target random access configuration comprises:
determining the QoS flow of to-be-transmitted data; and
initiating random access to the network device based on the association relationship by using the target random access configuration associated with the QoS flow.

6. The method according to any one of claims 1 to 5, wherein the target random access configuration comprises a two-step random access configuration and a four-step random access configuration, and the initiating random access to the network device comprises:
initiating two-step random access to the network device.

7. The method according to claim 6, wherein the initiating two-step random access to the network device comprises:
initiating two-step random access to the network device during running of a timer.

8. The method according to any one of claims 1 to 7, wherein the method further comprises:
determining that there is no random access resource of the target random access configuration in a first bandwidth part BWP; and
switching from the first BWP to a second BWP, wherein there is the random access resource of the target random access configuration in the second BWP; and
the initiating random access to the network device by using the target random access configuration comprises:
initiating random access to the network device in the second BWP by using the target random access configuration.

9. The method according to claim 8, wherein the second BWP is an initial BWP or a default BWP.

10. The method according to any one of claims 1 to 9, wherein the random access configuration comprises the first indication information.

11. The method according to any one of claims 1 to 9, wherein the receiving first indication information from the network device comprises:
receiving a logical channel configuration from the network device, wherein the logical channel configuration comprises the first indication information; or
receiving a radio bearer RB configuration from the network device, wherein the RB configuration comprises the first indication information.

12. The method according to any one of claims 1 to 11, wherein the method further comprises:
receiving second indication information from the network device, wherein the second indication information is used to indicate to initiate two-step contention-based random access or two-step contention-free random access.

13. A random access method, comprising:
sending a random access configuration to a terminal;
sending first indication information to the terminal, wherein the first indication information is used to determine a target random access configuration in the random access configuration; and
receiving random access initiated by the terminal by using the target random access configuration.

14. The method according to claim 13, wherein the first indication information indicates the target random access configuration.

15. The method according to claim 13, wherein the first indication information indicates an association relationship between a logical channel and the target random access configuration.

16. The method according to claim 13, wherein the first indication information indicates an association relationship between a QoS flow and the target random access configuration.

17. The method according to any one of claims 13 to 16, wherein the target random access configuration comprises a two-step random access configuration and a four-step random access configuration, and the receiving random access initiated by the terminal by using the target random access configuration comprises:
receiving two-step random access initiated by the terminal.

18. The method according to any one of claims 13 to 17, wherein the random access configuration comprises the first indication information.

19. The method according to any one of claims 13 to 17, wherein the sending first indication information to the terminal comprises:
sending a logical channel configuration to the terminal, wherein the logical channel configuration comprises the first indication information; or
sending an RB configuration to the terminal, wherein the RB configuration comprises the first indication information.

20. The method according to any one of claims 13 to 17, wherein the sending first indication information to the terminal comprises:
sending a radio resource control RRC connection reconfiguration message to the terminal, wherein the RRC connection reconfiguration message comprises the first indication information; or
sending an RRC reconfiguration message to the terminal, wherein the RRC reconfiguration message comprises the first indication information.

21. A random access apparatus, comprising units configured to perform steps of the method according to any one of claims 1 to 12.

22. A random access apparatus, comprising units configured to perform steps of the method according to any one of claims 13 to 20.

23. A random access apparatus, comprising a processor and an interface circuit, wherein the processor is configured to communicate with a network device through the interface circuit, and perform the method according to any one of claims 1 to 12.

24. A random access apparatus, comprising a processor and an interface circuit, wherein the processor is configured to communicate with a terminal through the interface circuit, and perform the method according to any one of claims 13 to 20.

25. A random access apparatus, comprising a processor, wherein the processor is configured to invoke a program in a memory, to perform the method according to any one of claims 1 to 12.

26. A random access apparatus, comprising a processor, wherein the processor is configured to invoke a program in a memory, to perform the method according to any one of claims 13 to 20.

27. A terminal, comprising the apparatus according to any one of claim 21, 23, or 25.

28. A network device, comprising the apparatus according to any one of claim 22, 24, or 26.

29. A storage medium, comprising a program, wherein when the program is run by a processor, the method according to any one of claims 1 to 20 is performed.

30. A random access method, comprising:
receiving first indication information from a network device, wherein the first indication information is used to determine a random access type; and
initiating, to the network device based on the first indication information, random access of the type indicated by using the first indication information.

31. The method according to claim 30, wherein the first indication information is a physical random access channel mask index PRACH mask index, and the initiating, to the network device, random access of the type indicated by using the first indication information comprises:
when a value of the PRACH mask index is a first value, initiating two-step contention-free random access; or
when a value of the PRACH mask index is a second value, initiating four-step contention-free random access.

32. The method according to claim 31, wherein the first value is further used to indicate a physical random access channel PRACH resource of the two-step contention-free random access; and
the second value is further used to indicate a physical random access channel resource of the four-step contention-free random access.

33. The method according to claim 30, wherein the first indication information is a preamble index, and the initiating, to the network device, random access of the type indicated by using the first indication information comprises:
when a value of the preamble index is a first value, initiating two-step contention-based random access to the network device; or
when a value of the preamble index is a second value, initiating four-step contention-based random access to the network device.

34. The method according to claim 33, wherein the preamble index occupies seven bits; and
when the first six bits in the seven bits are all 0 and a value of the 7^{th} bit in the seven bits is a first bit value, the preamble index is used to indicate to initiate two-step contention-based random access, wherein when the value of the 7^{th} bit is the first bit value, the value of the preamble index is the first value; or
when the first six bits in the seven bits are all 0 and a value of the 7^{th} bit in the seven bits is a second bit value, the preamble index is used to indicate to initiate four-step contention-based random access, wherein when the value of the 7^{th} bit is the second bit value, the value of the preamble index is the second value.

35. The method according to claim 33 or 34, wherein when the value of the preamble index is a value other than the first value and the second value, the method further comprises:
initiating two-step contention-free random access or four-step contention-free random access to the network device based on a capability of a terminal, a channel status, a position of a physical downlink control channel PDCCH resource, or a mapping relationship between the preamble index and a PRACH resource.

36. The method according to claim 35, wherein the receiving first indication information from a network device comprises:
receiving a physical downlink control channel PDCCH order from the network device, wherein the PDCCH order comprises the preamble index and a synchronization signal broadcast channel block index SSB index, and there is a correspondence between the SSB index and a PRACH resource range; and the initiating two-step contention-free random access or four-step contention-free random access to the network device comprises:
determining one or more PRACH resources based on the SSB index; and
selecting a first PRACH resource from the one or more PRACH resources based on the preamble index, to initiate two-step contention-free random access or four-step contention-free random access to the network device.

37. A random access apparatus, comprising units configured to perform steps of the method according to any one of claims 30 to 36.

38. A random access apparatus, comprising a processor and an interface circuit, wherein the processor is configured to communicate with a network device through the interface circuit, and perform the method according to any one of claims 30 to 36.

39. A random access apparatus, comprising a processor, wherein the processor is configured to invoke a program in a memory, to perform the method according to any one of claims 30 to 36.

40. A terminal, comprising the apparatus according to any one of claims 37 to 39.

41. A storage medium, comprising a program, wherein when the program is run by a processor, the method according to any one of claims 30 to 36 is performed.
